# EUROPEAN PATENT APPLICATION

(11) **EP 4 507 344 A1**
(43) Date of publication of application: **12.02.2025**
(21) Application number: 24192685.6
(22) Date of filing: 02.08.2024
(51) Int. Cl.: H04W 4/40, H04W 28/02, H04W 76/14

(54) **SERVICE TO FREQUENCY MAPPING FOR SIDELINK CARRIER AGGREGATION**

(30) Priority: 08.08.2023 US 202363531350 P; 24.07.2024 US 202418783395
(71) Applicant: Apple Inc., Cupertino, CA 95014 (US)
(72) Inventor: CHENG, Peng, Cupertino, 95014 (US); ZHANG, Dawei, Cupertino, 95014 (US); HU, Haijing, Cupertino, 95014 (US); MANITHARA VAMANAN, Sudeep, Cupertino, 95014 (US); WU, Zhibin, Cupertino, 95014 (US)
(74) Representative: COPA Copenhagen Patents

(57) **Abstract**

In accordance with aspects of the present disclosure, a user equipment (UE) may receive a configuration for mapping PC5 quality of service (QoS) flows to frequencies. The UE may also receive a sidelink logical channel configuration message indicating that sidelink data associated with a logical channel can be mapped to one or more sidelink carriers on a list of allowed sidelink carriers. Accordingly, the UE may transmit the sidelink data associated with the logical channel via at least one sidelink carrier on the list of allowed sidelink carriers based at least in part on mapping the logical channel to the at least one sidelink carrier in accordance with the configuration for mapping and the sidelink logical channel configuration message.

## Description

### CROSS-REFERENCE TO RELATED APPLICATIONS

This application claims the benefit of U.S. Provisional Patent Application No. 63/531,350, filed August 8, 2023, and U.S. Nonprovisional Application No. 18/783,395, filed July 24 ,2024, the entireties of which are incorporated herein by reference.

### BACKGROUND

Wireless communication networks provide integrated communication platforms and telecommunication services to wireless user devices. Example telecommunication services include telephony, data (e.g., voice, audio, and/or video data), messaging, and/or other services. The wireless communication networks have wireless access nodes that exchange wireless signals with the wireless user devices using wireless network protocols, such as protocols described in various telecommunication standards promulgated by the Third Generation Partnership Project (3GPP). Example wireless communication networks include time division multiple access (TDMA) networks, frequency-division multiple access (FDMA) networks, orthogonal frequency-division multiple access (OFDMA) networks, Long Term Evolution (LTE), and Fifth Generation New Radio (5G NR). The wireless communication networks facilitate mobile broadband service using technologies such as OFDM, multiple input multiple output (MIMO), advanced channel coding, massive MIMO, beamforming, and/or other features.

### SUMMARY

Aspects of the implementations are directed to a method performed by a user equipment (UE), the method including determining that a PC5 quality of service (QoS) Flow is added or modified; providing, from a vehicle to everything (V2X) layer, a new or updated set of QoS Flow-to-frequency mapping to an access stratum layer; and in the access stratum (AS) layer, deriving a mapping from target layer-2 identifier (L2 ID)-to-frequency mapping based on the received QoS Flow-to-frequency mapping.

In some implementations, the QoS Flow-to-frequency mapping comprises a new service to frequency mapping.

In some implementations, the QoS Flow-to-frequency mapping comprises a new service to L2 ID mapping.

In some implementations, the V2X layer provides a full set of all services to frequencies mapping.

In some implementations, the V2X layer provides a full set of services to frequencies mapping in initial link, and provides a change to the set of services to frequencies mapping upon determination that a PC5 QoS Flow is added or modified.

In some implementations, the AS layer synthesizes a QoS Flow to carrier mapping.

In some implementations, the AS layer generates a subset of carriers among all QoS Flows, designated as allowed sidelink carriers, based on an intersection between the carriers mapped to all of the QoS Flows received from the V2X layer.

Some implementations include notifying another UE of a set of allowed sidelink carriers via PC5 radio resource control (RRC) messaging.

In some implementations, the UE is in CONNECTED state, and notifies a connected gNB of the allowed sidelink carriers via an RRC message that includes sidelink user information (SUI).

In some implementations, the allowed sidelink carriers is an empty set and the UE is in IDLE/INACTIVE state, and the UE requests to enter the CONNECTED state to notify a gNB of the empty set via SUI.

Aspects of the implementations are directed to an apparatus, such as a UE, with one or more baseband processors configured to perform the method of any of the method steps above.

Aspects of the implementations are directed to a method performed by a UE, the method including receiving a list of allowed frequencies in a sidelink logical channel configuration message, or other RRC configuration message, for a logical channel; receiving a list of frequencies associated with the sidelink radio bearer (SLRB) index in an RRC sidelink reconfiguration message; in the medium access control (MAC) layer, mapping a logical channel to an allowed frequency from the list of allowed frequencies that is associated with the SLRB index; and transmitting data to a UE using sidelink resources including at least one frequency mapped to the logical channel.

Some implementations include identifying overlapping frequencies between the list of allowed frequencies and the frequencies in the list of frequencies associated with the SLRB.

Some implementations include identifying an available set of SLRBs from a higher layer mapping for QoS Flow to frequencies; determining a different list of allowed frequencies based on the available set of SLRBs; and mapping the logical channel to an allowed frequency from the different list of allowed frequencies.

In some implementations, the UE is in IDLE/INACTIVE/OOC mode.

In some implementations, the UE is in CONNECTED mode, and the method includes identifying an available set of SLRBs from a higher layer mapping for QoS Flow to frequencies; notifying a network entity that the UE is connected to of the received QoS Flow-to-frequencies mapping; and receiving from the network entity to a logical channel prioritization (LCP) restriction in an RRC message including a second sidelink logical channel configuration message.

In some implementations, the second sidelink logical channel configuration message comprises a new list of allowed frequencies for the logical channel.

Some implementations may include mapping an unknown QoS Flow to an SLRB index that is associated with a logical channel with a frequency list aligned with the UE's mapped frequencies.

In some implementations, the UE is in CONNECTED state, and the method comprises notifying a connected network entity of the mapping of the unknown QoS Flow to the selected SLRB index.

In some implementations, no existing SLRB has an associated logical channel with a frequency list aligned to the UEs mapped frequencies, the method including adding mapped frequencies to a logical channel prioritization restriction of a default SLRB; and mapping an unknown QoS Flow to the default SLRB.

In some implementations, no existing SLRB has an associated logical channel with a frequency list aligned to the UEs mapped frequencies, the method including if the UE is in a CONNECTED state, notifying a network entity connected to the UE of a failure to map the unknown QoS Flow to a default SLRB.

In some implementations, the UE is in the CONNECTED state, the method further comprising notifying a connected network entity, using a sidelink user information (SUI), of the received QoS Flow to frequency mapping received from the V2X layer.

In some implementations, the method includes receiving a new QoS Flow to frequency mapping from a V2X layer; determining an existing sidelink radio bearer (SLRB) to frequency mapping; remapping the new QoS Flow to the existing SLRB; and transmitting data to another UE using the new QoS Flow to SLRB mapping.

In some implementations, the UE cannot change one or more frequencies mapped to the existing SLRB based on a logical channel prioritization restriction of an associated logical channel.

In some implementations, the UE overwrites the Service Data Adaptation Protocol (SDAP) configuration in the Uu link using RRC or SIB or other reconfiguration messaging.

Some implementations include reporting the new QoS Flow to frequency mapping to a connected network entity via a sidelink user information (SUI) message; and receiving, from the connected network entity, a reconfiguration of the QoS Flow to SLRB mapping.

Some implementations include informing the connected network entity, by a SUI message, that the UE cannot change the frequency set of the mapped SLRB because of a logical channel prioritization restriction associated with a logical channel.

In some implementations, the UE is in a CONNECTED state, the method further comprising notifying a connected network entity of the received QoS Flow to frequency mapping received from the V2X layer via SUI.

Aspects of the embodiments are directed to a UE that includes one or more baseband processors and memory encoded with instructions that, when executed by the one or more baseband processors, cause the one or more baseband processors to perform the operations of any preceding method step.

Aspects of the embodiments are directed to a system comprising one or more processors and one or more storage devices on which are stored instructions that are operable, when executed by the one or more processors, to cause the one or more processors to perform the operations of any of the above paragraphs.

Aspects of the embodiments are directed to an apparatus configured to perform one or more operations described in the specification.

The details of one or more embodiments of these systems and methods are set forth in the accompanying drawings and the description below. Other features, objects, and advantages of these systems and methods will be apparent from the description and drawings, and from the claims.

### BRIEF DESCRIPTION OF THE FIGURES

FIG. 1 illustrates an example communication system that supports sidelink communications, according to some implementations.
FIG. 2A-C are schematic diagrams illustrating example carrier aggregation (CA) schemes for sidelink communications, according to some implementations.
FIG. 3A is a schematic diagram illustrating LTE sidelink carrier selection and scheduling operations for V2X communications.
FIG. 3B is a schematic diagram that illustrates an NR sidelink single carrier transmission scheme.
FIG. 4 is a signaling diagram illustrating sidelink communications between two UEs.
FIG. 5 illustrates an SDAP header that is used for sidelink unicast communications over a PC5 interface.
FIG. 6 illustrates a mapping between QoS flows, logical channels, and L2 IDs.
FIG. 7 is an example process flow diagram illustrating a link-level frequency mapping scheme, according to some implementations.
FIG. 8 is an example process flow diagram illustrating another link-level frequency mapping scheme, according to some implementations.
FIG. 9 illustrates a mapping between QoS flows, logical channels, and L2 IDs, according to some implementations.
FIGS. 10A-10B are flow charts illustrating an example process for configuring a set of allowed sidelink carriers, according to some implementations.
FIGS. 11A-11B are schematic diagrams illustrating service to frequency mapping schemes for LTE and NR sidelink, according to some implementations.
FIG. 12 is a process flow diagram illustrating a method of logical channel-level frequency selection, according to some implementations.
FIG. 13A is a process flow diagram illustrating QoS flow-level frequency selection, according to some implementations.
FIG. 13B is a process flow diagram illustrating an example method for configuring unicast sidelink communications, according to some implementations.
FIGS. 14A-14B are flow diagrams illustrating example methods for reporting LCP restriction updates to the network, according to some implementations.
FIG. 15 illustrates an example UE, according to some implementations.
FIG. 16 illustrates an example access node, according to some implementations.

Like reference numbers indicate like features.

### DETAILED DESCRIPTION

Quality of Service (QoS) refers to the performance characteristics of a network or service, as perceived by end users. In 5G cellular systems, QoS encompasses a wide range of factors, including service reliability, availability, latency, throughput, and traffic prioritization. QoS is a flow-based policy that is applied to each data stream from the wireless physical (PHY) layer to the core network. In sidelink deployments, QoS flows are mapped to logical channels-also referred to as sidelink radio bearers (SLRBs). In turn, these logical channels are mapped to sidelink carriers (e.g., frequencies), which deliver the associated data over a wireless medium. The mapping between QoS flows, logical channels, and sidelink carriers is visible to lower layers, such as the PHY layer.

For MAC layer operations, however, the mapping between QoS flows and sidelink carriers may be inaccessible because the MAC layer is not configured to read the Service Data Adaptation Protocol (SDAP) header of protocol data units (PDUs), which includes this information. As such, the visibility of the MAC layer may be limited to logical channel operations. This can be problematic because other layers may restrict which QoS flows can be delivered or mapped to certain sidelink carriers. For example, the V2X layer and/or the access stratum (AS) layer may have a list of allowed sidelink carriers to which a given QoS flow can be mapped. Existing frequency mapping techniques may thus be unable to guarantee that QoS flows are always delivered using appropriate sidelink carriers.

This disclosure describes signaling mechanisms that ensure that QoS flows are only mapped to allowed sidelink carriers. In accordance with one or more aspects of the present disclosure, a first UE receives a sidelink logical channel configuration message, e.g., an information element (IE) called *SL-LogicalChannelConfig,* indicating that sidelink data associated with a logical channel can be mapped to one or more sidelink carriers on a list of allowed sidelink carriers. The first UE determines a suitable QoS flow to frequency mapping based on the sidelink logical channel configuration message. Accordingly, the first UE transmits the sidelink data to a second UE via at least one sidelink carrier on the list of allowed sidelink carriers.

The first UE may also transmit an RRC sidelink reconfiguration message (e.g., *RRCReconfigurationSidelink*) indicating a sidelink carrier to be released, modified, or added for unicast sidelink communications between the first UE and the second UE. In some implementations, the RRC sidelink reconfiguration message further indicates one or more QoS flows to be mapped to (or released from) a configured sidelink data radio bearer (DRB). Accordingly, the second UE may update the QoS flow to frequency mapping based on the RRC sidelink reconfiguration message. Among other advantages, the techniques described herein improve the reliability and consistency of QoS flow mapping schemes for NR sidelink CA.

More specifically, this disclosure describes frequency selection techniques called link-level frequency selection, logical channel-level frequency selection, and QoS flow-level frequency selection. A communication system can be configured to use one or more of these frequency selection techniques.

In some implementations, link-level frequency selection implements service to frequency mapping techniques of LTE sidelink CA and NR groupcast/broadcast CA. In this technique, whenever PC5 QoS flows are added or modified, the V2X layer provides a new set of carriers for the sidelink unicast link, such that the mapping is dynamically updated by the V2X layer to the AS layer. Meanwhile, the AS layer synthesizes the QoS flow-to-carrier mapping, SDAP configuration (e.g., QoS flow indicator [QFI] to SLRB mapping), and SLRB list to determine a set of allowed sidelink carriers. A TX UE (e.g., UE 105-1) notifies an RX UE (e.g., UE 105-2) of these allowed sidelink carriers via PC5 RRC, and may optionally notify the network (e.g., the base station 110-1) of the same information if the TX UE is in a CONNECTED state.

In some implementations, logical channel-level frequency selection uses the concept of QoS flow(s) to frequency mapping. For example, there may be a new logical channel prioritization (LCP) restriction on the carrier set of a sidelink grant (e.g., for a given carrier, only some logical channels can be selected). This technique involves restricting which carrier(s) can be mapped to a particular sidelink DRB. The TX UE notifies the RX UE via PC5 RRC of the restricted carrier set for the sidelink DRB. In some examples, unknown QoS flows cannot be mapped to the default SLRB because the default SLRB may not satisfy frequency mapping constraints.

In some implementations, QoS flow-level frequency selection updates the QoS flow to SLRB mapping according to QoS flow to frequencies mapping information provided by the V2X layer. In some examples, the TX UE is allowed to autonomously update the QoS flow to sidelink DRB mapping. Additionally or alternatively, the TX UE can report the mapping information to the network (via SUI) and wait for the network to reconfigure the QoS flow to SLRB mapping.

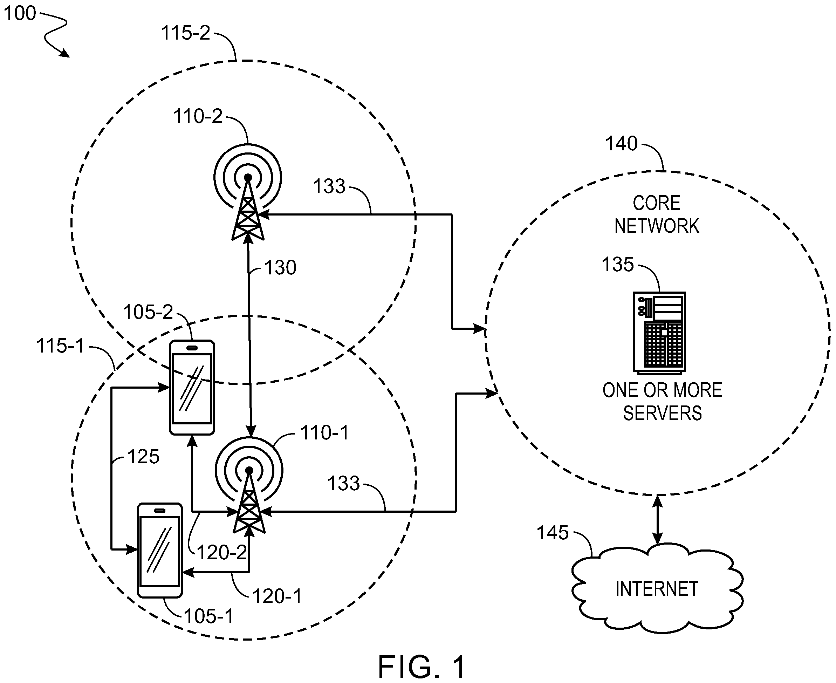

FIG. 1 illustrates an example communication system 100 that supports sidelink communications, according to some implementations. It is noted that the system of FIG. 1 is merely one example of a possible system, and that features of this disclosure may be implemented in other wireless communication systems.

The following description is provided for an example communication system that operates in conjunction with fifth generation (5G) networks as provided by 3GPP technical specifications. However, the example implementations are not limited in this regard and the described examples may apply to other networks that may benefit from the principles described herein, such as 3GPP Long Term Evolution (LTE) networks, Wi-Fi networks, and the like. Furthermore, other types of communication standards are possible, including future 3GPP systems (e.g., Sixth Generation (6G)), or the like. While aspects may be described herein using terminology commonly associated with 5G NR, aspects of the present disclosure can be applied to other systems, such as systems subsequent to 5G (e.g., 6G).

Frequency bands for 5G NR may be separated into two different frequency ranges. Frequency Range 1 (FR1) may include frequency bands operating in sub-6 GHz frequencies, some of which are bands that may be used by previous standards, and may potentially be extended to cover new spectrum offerings from 410 MHz to 7125 MHz. Frequency Range 2 (FR2) may include frequency bands from 24.25 GHz to 52.6 GHz. Bands in the millimeter wave (mmWave) range of FR2 may have smaller coverage but potentially higher available bandwidth than bands in the FR1.

As shown, the communication system 100 includes a number of user devices. More specifically, the communication system 100 includes two UEs 105 (UE 105-1 and UE 105-2 are collectively referred to as "UE 105" or "UEs 105"), two base stations 110 (base station 110-1 and base station 110-2 are collectively referred to as "base station 110" or "base stations 110"), two cells 115 (cell 115-1 and cell 115-2 are collectively referred to as "cell 115" or "cells 115"), and one or more servers 135 in a core network (CN) 140 that is connected to the Internet 145.

In some implementations, the UEs 105 can directly communicate with base stations 110 via links 120 (link 120-1 and link 120-2 are collectively referred to as "link 120" or "links 120"), which utilize a direct interface with the base stations referred to as a "Uu interface." Each of the links 120 can represent one or more channels. The links 120 are illustrated as an air interface to enable communicative coupling, and can be consistent with cellular communication protocols, such as a 5G protocol, a NR protocol, an NR-based access to unlicensed spectrum (NR-U) protocol, and/or any of the other communications protocols discussed herein.

As shown, certain user devices may be able to conduct communications with one another directly, e.g., without an intermediary infrastructure device such as base station 110-1. In this example, UE 105-1 may conduct communications directly with UE 105-2. Similarly, the UE 105-2 may conduct communications directly with UE 105-1. Such peer-to-peer communications may utilize a "sidelink" interface such as a PC5 interface. In certain implementations, the PC5 interface supports direct cellular communication between user devices (e.g., between UEs 105), while the Uu interface supports cellular communications with infrastructure devices such as base stations. For example, the UEs 105 may use the PC5 interface for a radio resource control (RRC) signaling exchange between the UEs (also called PC5-RRC signaling). The PC5/Uu interfaces are used only as an example, and PC5 as used herein may represent various other possible wireless communications technologies that allow for direct sidelink communications between user devices, while Uu in turn may represent cellular communications conducted between user devices and infrastructure devices, such as base stations.

In some implementations, the UEs 105 may be configured with parameters for communicating via the Uu interface and/or the sidelink interface. In some examples, the UEs 105 may be "pre-configured" with some parameters. In these examples, the parameters may be hardwired into the UEs 105 or coded into spec. Additionally, and/or alternatively, the UEs 105 may receive the parameters from the one or more of the base stations 110.

To transmit/receive data to/from one or more base stations 110 or UEs 105, the UEs 105 may include a transmitter/receiver (or alternatively, a transceiver), memory, one or more processors, and/or other like components that enable the UEs 105 to operate in accordance with one or more wireless communications protocols and/or one or more cellular communications protocols. The UEs 105 may have one or more antenna elements that enable the UEs 105 to maintain multiple links 120 and/or sidelinks 125 to transmit/receive data to/from multiple base stations 110 and/or multiple UEs 105. For example, as shown in FIG. 1, UE 105-1 may connect with base station 110-1 via link 120 and simultaneously connect with UE 105-2 via sidelink 125.

In some implementations, one or more SLRBs may be established on the sidelink 125. The SLRBs can include signaling radio bearers (SL-SRB) and/or data radio bearers (SL-DRB).

The PC5 interface may alternatively be referred to as a sidelink interface, and may include one or more logical channels, including but not limited to a Physical Sidelink Control Channel (PSCCH), a Physical Sidelink Shared Channel (PSSCH), a Physical Sidelink Discovery Channel (PSDCH), a Physical Sidelink Broadcast Channel (PSBCH), Physical Sidelink Feedback Channel (PSFCH), and/or any other like communications channels. The PSFCH carries feedback related to the successful or failed reception of a sidelink transmission. The PSSCH can be scheduled by sidelink control information (SCI) carried in the sidelink PSCCH. In some examples, the sidelink interface can operate on an unlicensed spectrum (e.g., in the unlicensed 5 Gigahertz (GHz) and 6 GHz bands) or a (licensed) shared spectrum.

In one example, the sidelink interface implements V2X communications. The V2X communications may, for example, adhere to 3GPP Cellular V2X (C-V2X) specifications, or to one or more other or subsequent standards whereby vehicles and other devices and network entities may communicate. V2X communications may utilize both long-range (e.g., cellular) communications as well as short- to medium-range (e.g., non-cellular) communications. Cellular-capable V2X communications may be called Cellular V2X (C-V2X) communications. C-V2X systems may use various cellular radio access technologies (RATs), such as 4G LTE or 5G NR RATs (or RATs subsequent to 5G, e.g., 6G RATs). Certain LTE standards usable in V2X systems may be called LTE-Vehicle (LTE-V) standards. As used herein in the context of V2X systems, and as defined above, the term "user devices" may refer generally to devices that are associated with mobile actors or traffic participants in the V2X system, e.g., mobile (able-to-move) communication devices such as vehicles, pedestrian user equipment (PUE) devices, and road side units (RSUs).

In some implementations, UEs 105 may be physical hardware devices capable of running one or more applications, capable of accessing network services via one or more radio links 120 with a corresponding base station 110 (also referred to as a "serving" base station), and capable of communicating with one another via sidelink 125. Link 120 may allow the UEs 105 to transmit and receive data from the base station 110 that provides the link 120. The sidelink 125 may allow the UEs 105 to transmit and receive data from one another. The sidelink 125 between the UEs 105 may include one or more channels for transmitting information from UE 105-1 to UE 105-2 and vice versa and/or between UEs 105 and UE-type RSUs and vice versa.

In some implementations, the base stations 110 are capable of communicating with one another over a backhaul connection 130 and may communicate with the one or more servers 135 within the CN 140 over another backhaul connection 133. The backhaul connections can be wired and/or wireless connections.

In some implementations, the UEs 105 are configured to use a resource pool for sidelink communications. A sidelink resource pool defines the time-frequency resources used for sidelink communications, and may be divided into multiple time slots, frequency channels, and frequency sub-channels. In some examples, the UEs 105 are synchronized and perform sidelink transmissions aligned with slot boundaries. A UE may be expected to select several slots and sub-channels for transmission of the transport block. In some examples, a UE may use different sub-channels for transmission of the transport block across multiple slots within its own resource selection window.

In some implementations, an exceptional resource pool may be configured for the UEs 105, perhaps by the base stations 110. The exceptional resource pool includes resources that the UEs 105 can use in exceptional cases, such as Radio Link Failure (RLF). The exceptional resource pool may include resources selected based on a random allocation of resources.

In some implementations, a UE that is initiating a communication with another UE is referred to as a transmitter UE (TX UE), and the UE receiving the communication is referred to as a receiver UE (RX UE). For example, UE 105-1 may be a TX UE and UE 105-2 may be an RX UE. Although FIG. 1 illustrates a single TX UE communicating with a single RX UE, a TX UE may communicate with more than one RX UE via a sidelink.

In some implementations, a TX UE that is initiating sidelink communication may determine the available resources (e.g., sidelink resources) and may select a subset of these resources to communicate with an RX UE based on a resource allocation scheme. Example resource allocation schemes include Mode 1 and Mode 2 resource allocation schemes. In Mode 1 resource allocation scheme (referred to as "Mode 1"), the resources are allocated by a network node for in-coverage UEs. In Mode 2 resource allocation scheme (referred to as "Mode 2"), the TX UE selects the sidelink resources (e.g., sidelink transmission resources).

In some implementations, the communication system 100 supports different cast types, including unicast, broadcast, and groupcast (or multicast) communications. Unicast refers to direction communications between two UEs. Broadcast refers to a communication that is broadcast by a single UE to a plurality of other UEs. Groupcast refers to communications that are sent from a single UE to a set of UEs that satisfy a certain condition (e.g., being a member of a particular group).

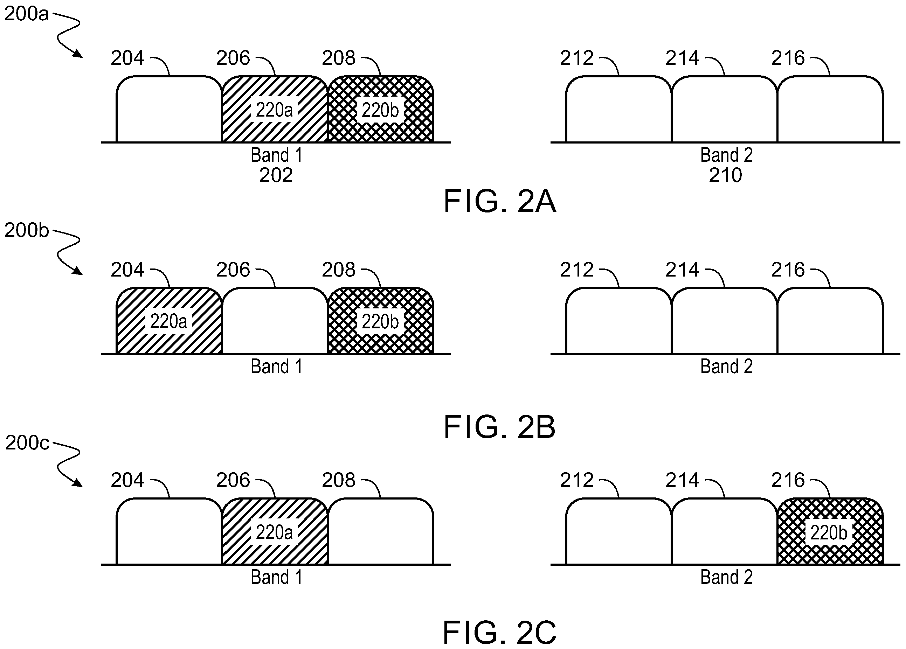

Wireless communication systems, such as the communication system 100, use CA to increase the effective data rate of a particular device. CA is a communication scheme in which multiple carriers (e.g., frequency channels) may be used for wireless communications between devices. CA involves using two or more component carriers (CC) to communicate data between a transmitter (such as a TX UE) and a receiver (such as an RX UE). CA types include intra-band, contiguous aggregation (shown in FIG. 2A), intra-band, non-contiguous aggregation (shown in FIG. 2B), or inter-band aggregation (shown in FIG. 2C).

FIGs. 2A-2C are schematic diagrams illustrating example CA schemes for sidelink communications. In the illustrated schemes, two bands are shown: Band 202 (e.g., Band 1) and Band 210 (e.g., Band 2), each with a plurality of CCs. In the illustrated example, Band 202 includes CC 204, CC 206, and CC 208; Band 210 includes CC 212, CC 214, and CC 216. Although three CCs are shown, it is understood that each band can include any number of CCs. Multiple CCs can be aggregated for a single user device (such one of the UEs 105 described with respect to FIG. 1). Each CC can have a predefined bandwidth, according to the network configuration, prevailing standards, or based on other settings.

FIG. 2A illustrates an intra-band contiguous CA scenario 200a in which CCs of adjacent frequency channels are aggregated. As shown in FIG. 2A, adjacent CCs 206 and 208 are aggregated. Additionally, in some examples, a CA scheme can identify a primary component carrier (PCC) and a secondary component carrier (SCC). Here, CC 206 is a PCC 220a, and CC 208 is a SCC 220b. In some examples, the network can designate a PCC to perform control signaling, as well as data transmissions. The SCC can be designated to perform data transmissions, thereby increasing throughput. In some examples, the PCC can also be configured during connection and reconfigured during handover, while the SCC can be configured as needed.

It is also possible to implement CA utilizing non-contiguous frequency channels, as shown in FIGs. 2B and 2C. FIG. 2B illustrates an intra-band, non-contiguous CA scenario 200b. In FIG. 2B, CC 204 is designated as the PCC 220a; while CC 208 is designated as the SCC 220b, where CC 204 and CC 208 are in the same frequency band.

FIG. 2C illustrates an inter-band CA scenario 200c (inter-band CA is naturally non-contiguous). In FIG. 2C, CC 206 is designated as the PCC 220a and component carrier 216 is designated as the SCC 220b, where CC 206 and CC 216 are in the same frequency band. By using inter-band, it is possible to implement CA using a frequency channel in a licensed frequency band as one CC, and a frequency channel in an unlicensed frequency band as another CC.

While the exemplary schemes illustrated in FIGs. 2A-2C and the associated description are provided by way of example as one possible manner of implementing CA, they are not intended to be limiting to the disclosure as a whole. Numerous alternatives to and variations of the details thereof are possible and should be considered within the scope of the present disclosure. For example, CA schemes may be implemented in conjunction with other wireless communication technologies; carriers according to other LTE releases or other radio access technologies altogether may be used; carriers having different channel widths may be used; different numbers of component carriers may be supported; and numerous other alternatives to and variations of the illustrated schemes are also possible.

As discussed in more detail below, this disclosure relates to NR sidelink CA, which can leverage some LTE sidelink CA operations. For example, the following LTE sidelink CA features can be supported for NR: sidelink carrier (re-)selection, synchronization of aggregated carriers, power control for simultaneous sidelink TX, packet duplication, etc. The features described herein are applicable to intra-band CA for the ITS band in FR1 (Band n47).

These features may be backwards compatible because UEs of different types/capabilities can receive sidelink broadcast/groupcast transmissions with CA for the carrier on which the UEs receive PSCCH/PSSCH and transmit corresponding sidelink HARQ feedback (when sidelink HARQ is enabled by SCI). In some examples, the described techniques are applicable to Mode 2 sidelink operations. For NR sidelink CA, the same subcarrier spacing (SCS) may be used among CA carriers to avoid resource selection and AGC issues. Time resources for PSFCH may be aligned among the carriers for CA.

SCI transmissions on PSCCH/PSSCH, PSFCH transmission, RSRP feedback, CSI feedback and congestion control may be implemented as per-carrier operations. Sidelink resource indications may be on a per-resource pool and per-carrier basis (no cross-carrier scheduling in SCI). A UE may transmit sidelink HARQ feedback on the same carrier on which the UE receives the associated PSSCH.

NR sidelink CA may use the LTE sidelink CA design for sidelink carrier (re-)selection, synchronization of aggregated carriers, transmit power split for simultaneous sidelink transmissions, packet duplication, and so forth. NR sidelink CA band combinations may work for intra-band contiguous CA. Sidelink NR CA is applicable to many V2X use cases.

Some aspects of LTE sidelink may not be suitable for PCC/SCC configurations in NR sidelink CA. For example, in LTE sidelink, there is no RRC connectivity in PC5 interface, no support of sidelink unicast, and no support for HARQ feedback. Also, the service to carrier mapping is provided by upper layers (such as the V2X layer), not configured by the AS layer. The upper layers can request the UE to send a V2X message of a V2X service identified by a V2X service identifier using V2X communication over PC5. The request from the upper layers includes: the V2X message; the V2X service identifier of the V2X service for the V2X message; the type of data in the V2X message (IP or non-IP); an indication of whether the V2X message contains non-IP data, the V2X message family of data in the V2X message; the V2X message priority; and optionally the ProSe Per-Packet Reliability (PPPR) value.

Upon a request from upper layers to send a V2X message of a V2X service identified by a V2X service identifier using V2X communication over PC5, if the UE is configured with V2X service identifier to V2X frequency mapping rules for V2X communication over PC5 and there are one or more V2X frequencies associated with the V2X service identifier of the V2X service for the V2X message in the current the geographical area, the one or more V2X frequencies associated with the V2X service identifier of the V2X service for the V2X message may be passed to the lower layers.

For NR sidelink, Layer-2 ID to frequency mapping is allowed. However, NR SL may be a single-carrier system.

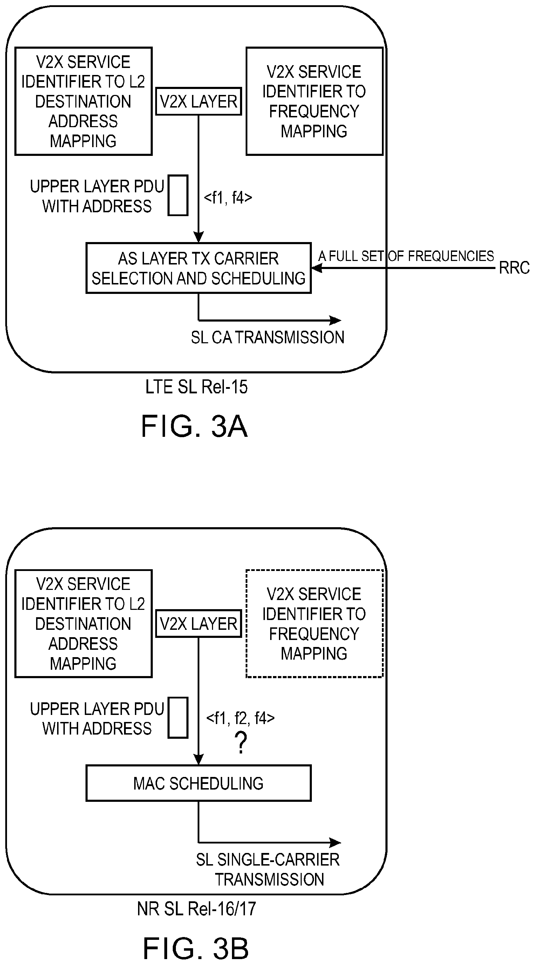

FIG. 3A is a schematic diagram illustrating LTE sidelink carrier selection and scheduling operations for V2X communications, and FIG. 3B is a schematic diagram illustrating an NR sidelink single carrier transmission scheme. Broadcast/groupcast signaling mechanisms of NR sidelink may be similar to LTE CA. For groupcast/broadcast, as in LTE sidelink CA, the carrier(s) that can be used for transmitting data are configured by the V2X layer for the L2 destination. However, for unicast, the V2X layer is only provisioned with a mapping between service identifier and initial L2 address used for unicast. The service identifier may be inaccessible to the AS layer and the initial L2 ID, which is only used in direct communication request (DCR), may be replaced by a self-chosen L2 ID in PC5-S link establishment procedure. After the L2 ID changes, the AS layer may be unable to obtain the mapping between L2 ID and frequencies.

PC5 unicast allows UEs to add, modify, and remove V2X services (e.g., PC5 QoS flows) to the same L2 ID pair. However, since the service information may be inaccessible to the AS layer, the UE may be unable to ensure that modified V2X services are transmitted only on the corresponding frequencies in the V2X layer.

The AS layer can obtain frequency information associated with the PC5-S messages sent for PC5 unicast link establishment by providing frequency information together with the PC5-S message to the AS layer from the V2X layer. Accordingly, the UE can ensure that modified V2X services are transmitted only on the corresponding frequencies mapped in the V2X layer. The AS layer maintains the PC5 unicast link related context for the lifetime of the PC5 unicast link based on the various information provided by the V2X layer, e.g., PC5 Link Identifier, source L2 ID, destination L2 ID, etc.

The V2X layer updates the AS layer about PC5 QoS Flow addition, modification, and/or removal for the established PC5 unicast link. For PC5 QoS Flow addition, the V2X layer provides one or more radio frequencies associated with the added PC5 QoS Flow to the AS layer. The V2X layer can determine the radio frequencies based on the mapping of V2X service type(s) associated with the PC5 QoS Flow to V2X frequencies by using the related configuration (e.g., a mapping of V2X service types to V2X frequencies with geographical areas).The V2X layer ensures that V2X service types associated with different radio frequencies are classified into distinct PC5 QoS Flows.

In the QoS model, Service Data Adaption Protocol (SDAP) is used to perform QoS flow to sidelink DRB mapping, but may not be used for QoS monitoring. The SDAP header is only used in sidelink unicast to indicate QoS flow remapping (end-marker). One difference between the sidelink DRB model and the Uu DRB is that logical channel ID (LCID) selection is made by the UE, not configured by NW. When the peer UE receives an SLRB configuration with a Radio Link Control (RLC) Acknowledged Mode (AM) / Unacknowledged Mode (UM) for a specific LCID via PC5 RRC from the initiating UE, the peer UE autonomously assigns this LCID value to the configured SLRB. For sidelink, 3 logical channel prioritization (LCP) restrictions are specified. These restrictions include: whether a configured grant Type 1 can be used; allowed configured grant(s) list; multiplexed with logical channel whether HARQ feedback is enabled or not.

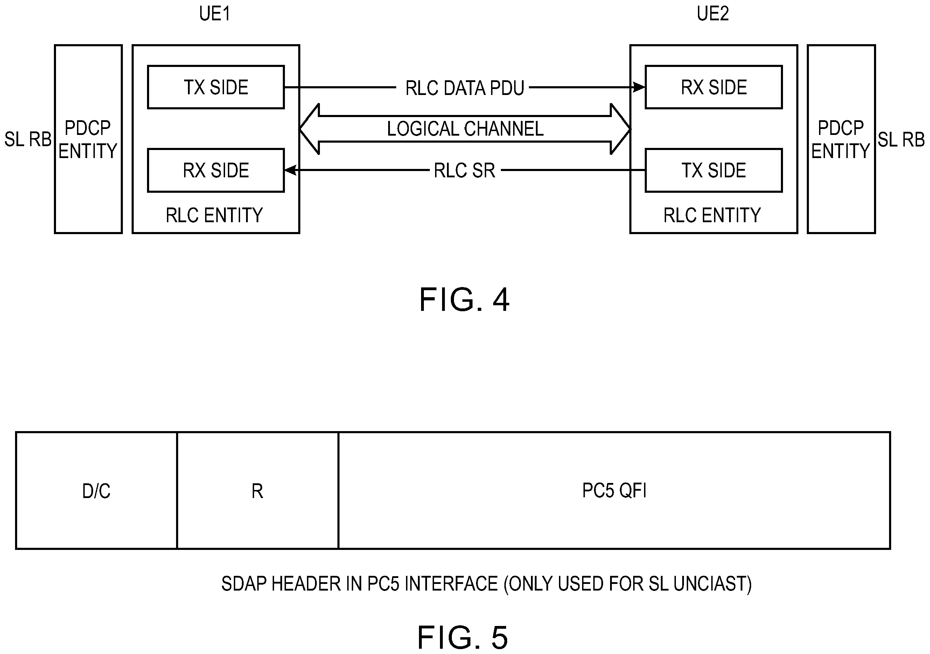

FIG. 4 is a signaling diagram illustrating sidelink communications between two UEs (UE1 and UE2). FIG. 5 illustrates an SDAP header that is used for sidelink unicast communications over a PC5 interface. In FIG. 4, UE1 and UE2 each include a Packet Data Convergence Protocol (PDCP) entity that is responsible for: the transfer of user plane data; transfer of control plane data; header compression; ciphering; and integrity protection. UE2 can send UE1 an RLC scheduling request using a sidelink resource. UE1 can respond to UE2 with an RLC data PDU on a sidelink resource.

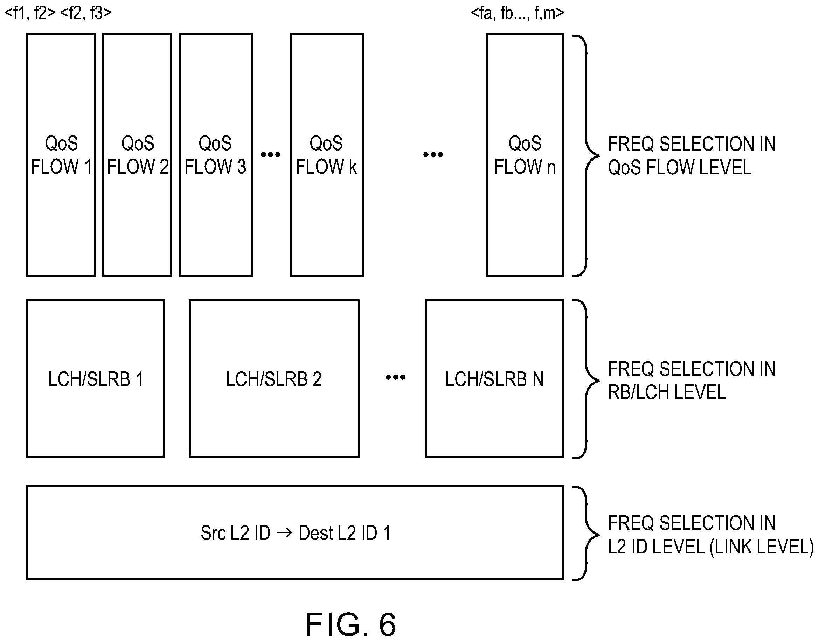

FIG. 6 illustrates a mapping between QoS flows, logical channels (also referred to as SLRBs), and L2 IDs. As shown in FIG. 6, the QoS flow to carrier mapping is provided to lower layer(s), and each QoS flow can be mapped to multiple sidelink carriers (e.g., f1,f2). But for MAC layer operation, the QoS flow is not visible, only the logical channel is visible. The QoS flow (e.g., a list of QFIs or QoS profiles) to be used in one logical channel is configured in RRC signaling by the network or via pre-configuration. The MAC layer may be unable to determine which QOS flows are providing data to a given logical channel buffer, so the MAC layer entity may be unable to determine the allowed frequency subset to use for a particular logical channel. This happens because the MAC layer entities are not supposed to read the SDAP header in UP procedures (an example SDAP header is shown in FIG. 5).

As described in more detail below, aspects of the present disclosure can help ensure that QoS flow are not delivered to a carrier that is not allowed by the V2X layer. In other words, for a PDU corresponding to a QoS flow: the carrier(s) selected must be on the list of carriers allowed by the V2X layer for this QoS flow; and the carrier(s) selected must be on the list of carriers allowed by the AS layer for sidelink CA operations. In some examples, a system information block (SIB) can provide a list of frequencies, but PC5 RRC may not provide this frequency list.

For LTE sidelink LCP, the MAC entity performs the following LCP procedure either for each SCI transmitted in an SC period, or for each SCI corresponding to a new transmission in V2X sidelink communication. The MAC entity allocates resources to the sidelink logical channels by means of the following operations. The MAC entity only considers sidelink logical channels that are allowed on the carrier where the SCI is transmitted for V2X sidelink communication, if the carrier is configured by upper layers. Likewise, the MAC entity only considers sidelink logical channels having a priority whose associated *threshCBR-FreqReselection* is no lower than the channel busy ratio (CBR) of the carrier when the carrier is (re-)selected. The MAC entity only considers one sidelink logical channel among sidelink logical channels corresponding to same PDCP entity, if duplication is activated.

First, the MAC entity selects a ProSe Destination, having the sidelink logical channel with the highest priority, among the sidelink logical channels having data available for transmission and having the same transmission format as the one selected corresponding to the ProSe Destination. The sidelink logical channels belonging to the same ProSe Destination may have the same transmission format. For each MAC PDU associated to the SCI, among the sidelink logical channels belonging to the selected ProSe Destination and having data available for transmission, the MAC entity allocates resources to the sidelink logical channel with the highest priority. If any resources remain, sidelink logical channels belonging to the selected ProSe Destination are served in decreasing order of priority until either the data for the sidelink logical channel(s) or the sidelink grant is exhausted, whichever comes first. Sidelink logical channels configured with equal priority are served equally.

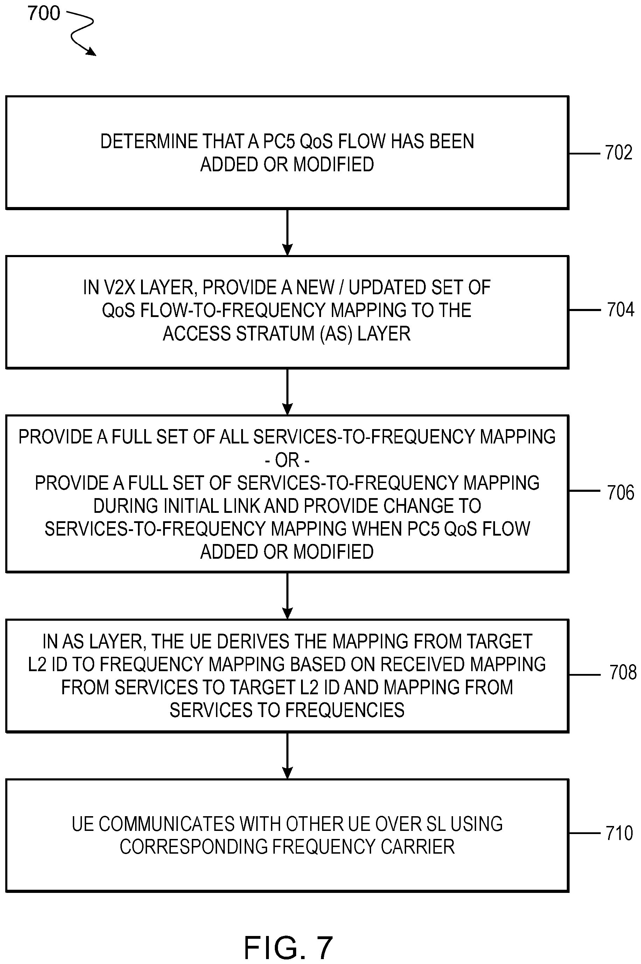

FIG. 7 is a process flow diagram 700 illustrating a link-level mapping scheme implemented by a UE, according to some implementations. In the example of FIG. 7, the service-to-frequency mapping of LTE sidelink CA and NR groupcast/broadcast CA is reused. At the outset, the UE determines (702) that a PC5 QoS flow has been added or modified. Whenever a PC5 QoS Flow is added or modified, the V2X layer may provide (704) a new/updated QoS Flow-to-frequency mapping to the AS layer. The new/updated mapping includes a new service-to-frequency mapping, and optionally a new service-to-L2 ID mapping. In some implementations, a full set of service-to-frequency mappings are provided (706). In other implementations, a full set of mappings are provided on an initial link, and the delta (e.g., changes to the mapping) is provided once the PC5 QoS flow is added/modified.

In the AS layer, the UE derives (708) the mapping from target L2 ID-to-frequency mapping based on the received mapping from service-to-target L2 ID and the mapping from services to frequencies. The UE can use (710) the mapped frequency carriers to communicate with another UE over a sidelink. The example shown in FIG. 7 uses the principles of LTE single carrier CA, where different target L2 IDs are used to differentiate different services. In other examples, the service-to-frequency mapping of LTE sidelink CA and NR groupcast/broadcast CA may be reused in conjunction with additional QoS flow(s)-to-frequency mapping information provided by the V2X layer. The AS layer may synthesize the QoS flow to carrier mapping, SDAP configuration (e.g., QFI to SLRB mapping), and SLRB-list to create a minimal set of allowed sidelink carriers.

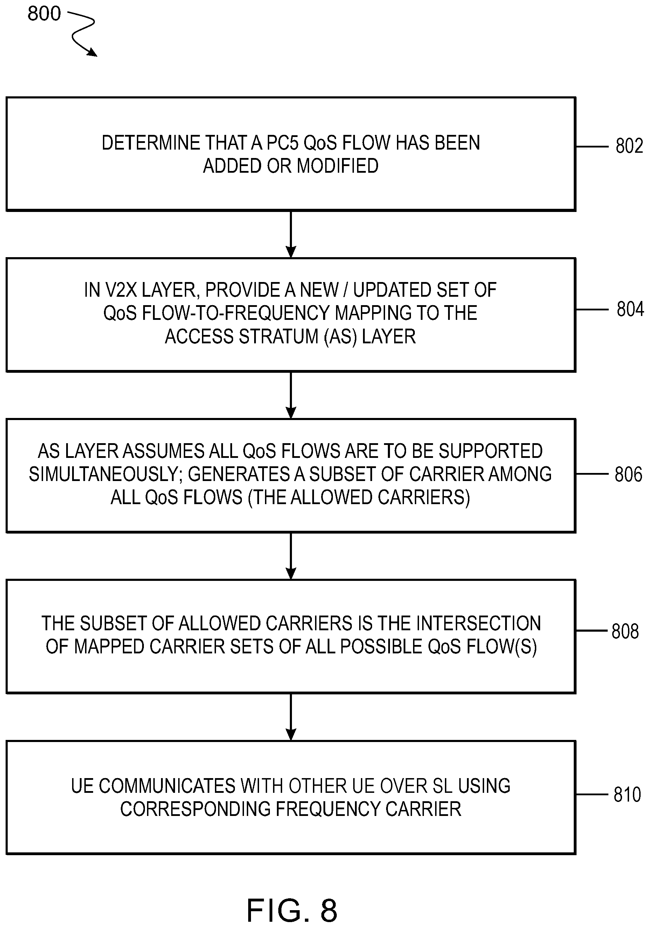

FIG. 8 is a process flow diagram 800 illustrating another link-level mapping scheme implemented by a UE, according to some implementations. At the outset, the UE determines (802) that a PC5 QoS flow has been added or modified. The V2X layer provides (804) the QoS flow to carrier mapping to the AS layer. The mapping is provided in a semi-static manner. The AS layer assumes (806) all those QoS flows are to be supported simultaneously. In turn, the AS layer generates (808) a subset of carriers among all QoS flows (e.g., a list of allowed sidelink carriers). The subset of allowed carriers is the intersection of mapped carrier sets of all possible QoS flow(s). The UE uses (810) the subset of allowed carriers to communicate with another UE over a sidelink.

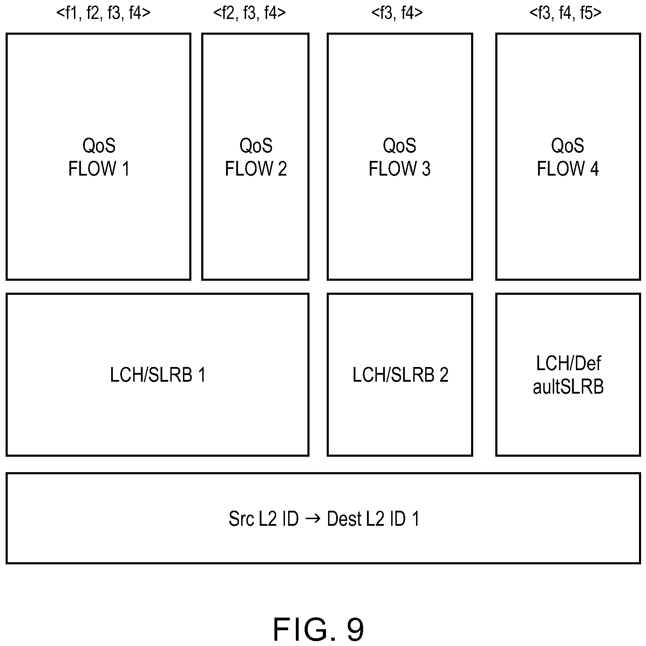

FIG. 9 illustrates a mapping between QoS flows, logical channels, and L2 IDs, according to some implementations. FIG. 9 shows which subsets of carriers are allowed for certain QoS Flows. For example, the V2X layer may indicate that QoS Flow 1 can be mapped to carriers <f1,f2,f3,f4>, QoS Flow 2 can be mapped to <f2,f3,f4>, QoS Flow 3 can be mapped to <f3,f4>, and QoS Flow 4 can be mapped to <f3,f4,f5>. In this example, the allowed sidelink carriers are <f3,f4>, since <f3,f4> are allowed for each of the four QoS Flows. The set of allowed sidelink carriers can be empty if no carrier is within the intersection.

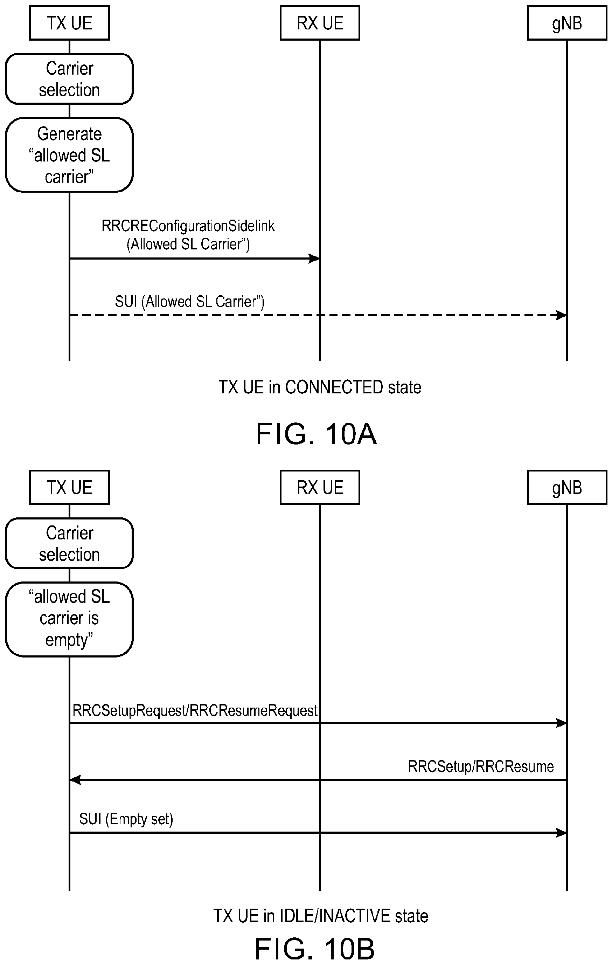

FIGS. 10A-10B are flow charts illustrating an example process for configuring a set of allowed sidelink carriers, according to some implementations. The process depicted in FIG. 10A may be implemented by a TX UE in a CONNECTED state, whereas the process depicted in FIG. 10B may be implemented by a TX UE in an IDLE/INACTIVE state. In both scenarios, the TX UE can notify the RX UE of the allowed sidelink carriers via PC5 RRC. If the TX UE is in a CONNECTED state, the TX UE can notify the network (e.g., a gNB) of the allowed sidelink carriers via SUI. As discussed above, the set of allowed carriers may be empty in some cases. If the TX UE is in an IDLE/INACTIVE state and the set of allowed sidelink carriers is empty, the TX UE can request to enter a CONNECTED state to report the issue to the network via SUI.

Link-level frequency mapping techniques (as shown in FIG. 7) may be simpler, and new LCP restrictions may not be needed. With link-level frequency mapping, different services are differentiated via different L2 IDs. Logical channel-level frequency selection may involve new signaling procedures at the logical channel/SLRB level to implement QoS flow(s) to frequency mapping. In such cases, the TX UE can derive the mapping from one SLRB to frequencies and restrict the logical channel selection. This can help resolve issues when there is an M-to-1 service to L2 ID mapping.

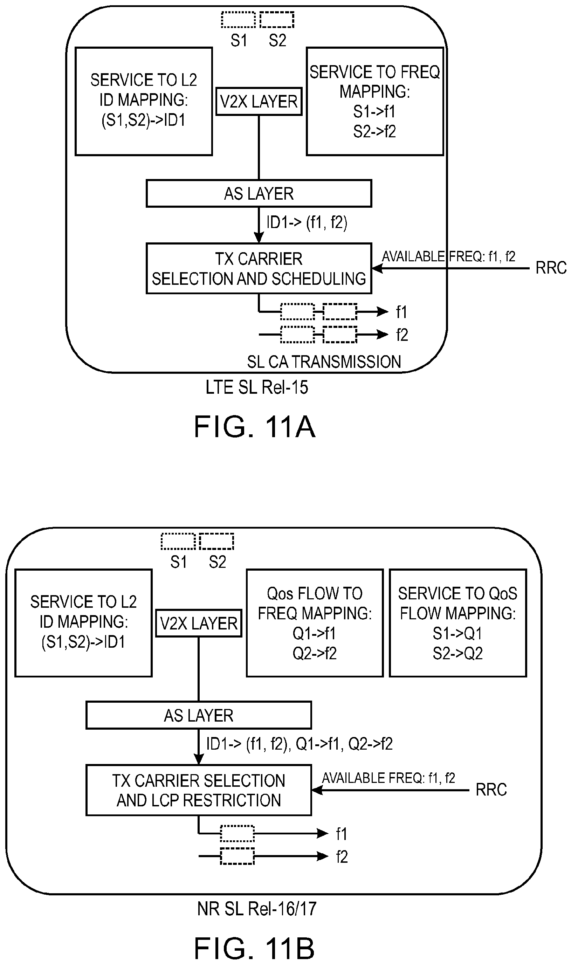

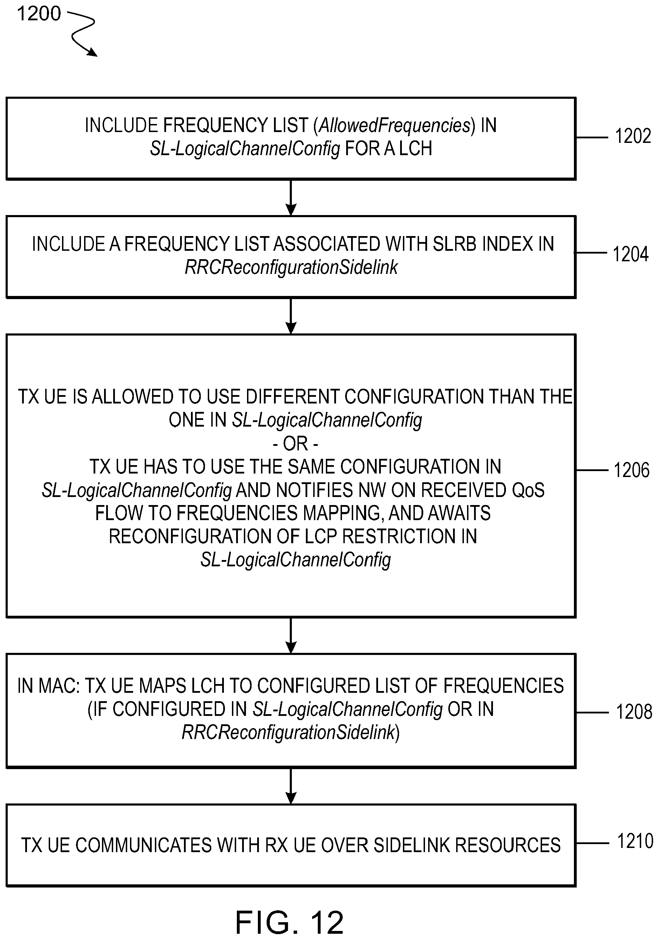

FIGs. 11A-11B are schematic diagrams illustrating logical channel-level frequency mapping schemes for LTE sidelink and NR sidelink, according to some implementations. FIG. 12 is a process flow diagram that illustrates a method of logical channel-level frequency selection, according to some implementations. To ensure that different services are sent in different frequencies with the same L2 ID, a new LCP restriction on carrier set may be introduced for logical channel-level frequency mapping.

At the RRC level, a frequency list (e.g. *AllowedFrequencies)* may be included (1202) in *SL-LogicalChannelConfig* for a particular logical channel. A frequency list associated with a given SLRB index may also be included (1204) in *RRCReconfigurationSidelink.* In some examples, the TX UE can use (1206) a configuration that is different from the one in *SL-LogicalChannelConfig* because the new mapping of QoS flows to frequencies provided by the V2X layer may dynamically change the SLRB carrier set. In other examples, the TX UE uses the same configuration indicated by *SL-LogicalChannelConfig.* The TX UE may notify the network of the received QoS flow to frequency mapping and wait for the network to reconfigure the LCP restriction(s) via *SL-LogicalChannelConfig.* In some implementations, the TX UE can use a different configuration if the TX UE is in a CONNECTED state. If the TX UE is in an IDLE/INACTIVE/OOC state, the TX UE may use the same configuration indicated by *SL-LogicalChannelConfig.*

In some embodiments, a new field may be added to *SL-LogicalChannelConfig* to indicate the allowed frequency list. Additionally, or alternatively, one or more fields may be added to the *RRCReconfigurationSidelink* IE to assist with adding, modifying, or releasing sidelink carriers. If configured in *SL-LogicalChannelConfig* or in *RRCReconfigurationSidelink* (at the MAC layer), the TX UE maps (1208) this logical channel to the configured list of frequencies and uses (1210) these resources to communicate with the RX UE over a sidelink. Unknown QoS flows may not be mapped to the default SRLB because the associated logical channel of the default SRLB may use disallowed carrier(s) of the unknown QoS flow. It is possible that the associated logical channel does not configure an LCP restriction on carriers, or the configured restriction on carriers is disallowed by the unknown QoS flow.

To address this issue, the TX UE can autonomously map an unknown QoS flow to an SLRB whose associated logical channel frequency list is aligned with the TX UE's mapped frequencies. If the TX UE is in a CONNECTED state, the TX UE can notify the network of the mapping of the unknown QoS flow to the selected SLRB. If no existing SLRB satisfies this condition, the TX UE can either (i) add mapped frequencies to the LCP restriction of the default SLRB and then map this unknown QoS flow to the default SLRB, or (ii) if the TX UE is in a CONNECTED state, notify the network of the failure to map the unknown QoS flow to default SLRB.

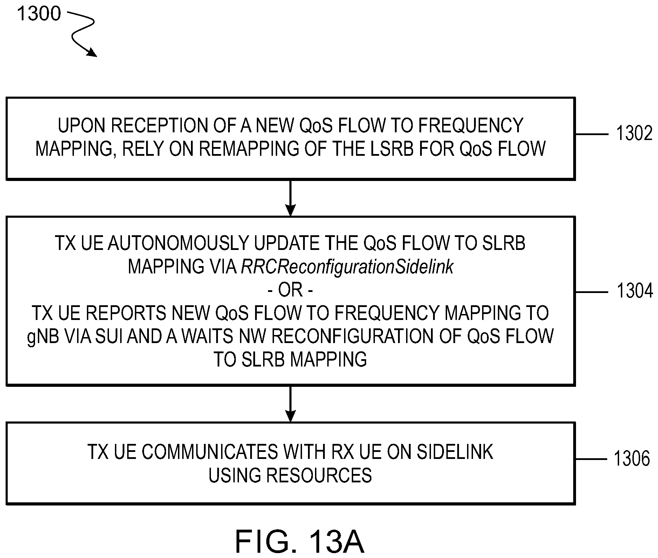

FIGs. 13A is a process flow diagram illustrating a QoS Flow-level frequency selection process implemented by a TX UE, according to some implementations. Upon reception (1302) of a new QoS flow to frequency mapping, the TX UE may not change the LCP restriction for some reasons, but will rely on a remapping of the SLRB for the concerned QoS flow. In some implementations, the TX UE can autonomously update (1304) the QoS flow to SLRB mapping vian *RRCReconfigurationSidelink.* Accordingly, the TX UE may communicate (1306) with the RX UE over a sidelink using the mapped carrier resources. The TX UE may not change the carrier set of the mapped SLRB via LCP restriction of the associated logical channel; however, the TX UE can remap the new QoS flow to an existing SLRB which satisfies the mapped frequency requirement. The TX UE may be able to overwrite the SDAP configuration in Uu RRC or SIB or reconfiguration.

Alternatively, the TX UE may report the new QoS flow to frequency mapping to the network/gNB via SUI, and wait for a network reconfiguration of QoS flow to SLRB mapping. The TX UE can also inform the gNB that the TX UE is unable to change the carrier set of the mapped SLRB via LCP restriction of the associated logical channel in SUI. In this example, the TX UE may be unable to overwrite the SDAP configuration in Uu RRC or SIB or reconfiguration.

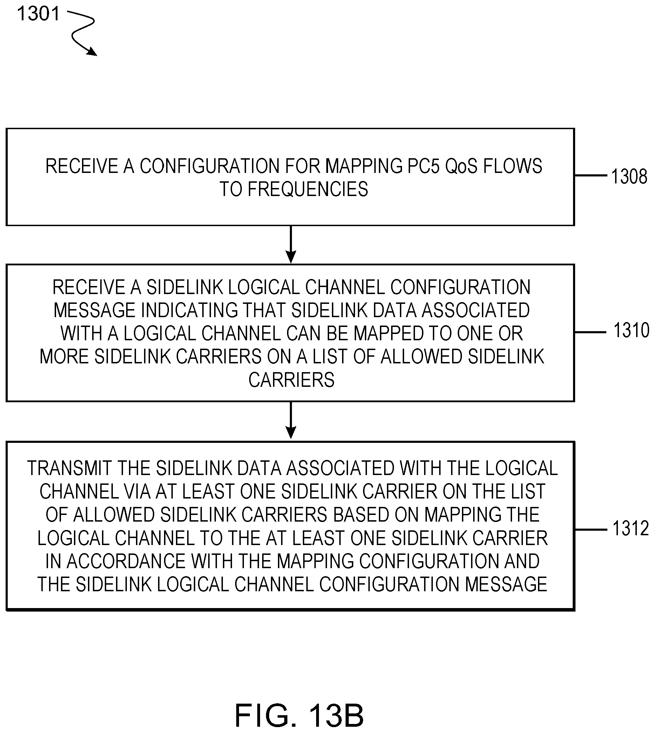

FIG. 13B is a process flow diagram illustrating an example method for configuring unicast sidelink communications between a TX UE and an RX UE, according to some implementations. In the example of FIG. 13B, the TX UE and/or the RX UE may receive (1308) a configuration for mapping PC5 QoS flows to frequencies. The TX UE may receive (1310) a sidelink logical channel configuration message (e.g., *SL-LogicalChannelConfig*) indicating that sidelink data associated with a logical channel can be mapped to one or more sidelink carriers on a list of allowed sidelink carriers. The TX UE may transmit (1312) the sidelink data associated with the logical channel via at least one sidelink carrier on the list of allowed sidelink carriers based on mapping the logical channel to the at least one sidelink carrier in accordance with the sidelink logical channel configuration message.

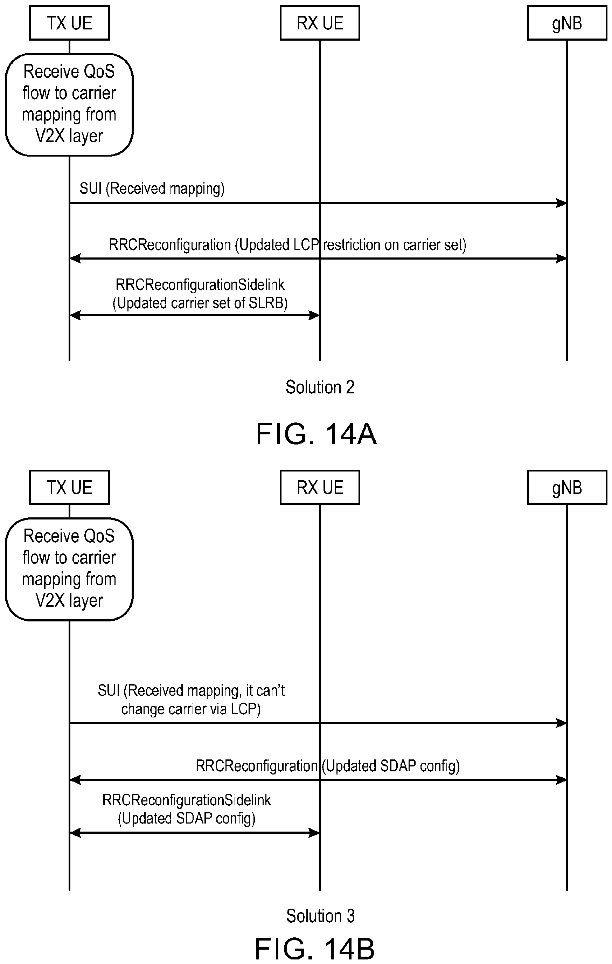

FIGs. 14A-14B are flow diagrams illustrating example methods for reporting LCP restriction updates to the network, according to some implementations. The operations of FIGs. 14A and 14B are applicable to both logical channel-level frequency mapping (described with reference to FIG. 12) and QoS flow-level mapping (described with reference to FIG. 13). Continuing with the example above, if the TX UE is in a CONNECTED state, the TX UE can notify NW of the received QoS flow to carrier mapping from the V2X layer via SUI.

For logical channel-level mapping (FIG. 12), the TX UE receives QoS Flow to carrier mapping from the V2X layer. The TX UE reports the received mapping to the gNB using SUI. The TX UE and the gNB/network can exchange *RRCReconfiguration* message(s), with updated LCP restriction(s) on the carrier set. The TX UE can exchange *RRCReconfigurationSidelink* message(s) with the RX UE to update the carrier set for a given SLRB. For QoS-level mapping (FIG. 13), the TX UE may receive QoS Flow to carrier mapping information from the V2X layer. The TX UE reports the received mapping to the gNB using SUI, but the TX UE may be unable to change the carrier via LCP. The TX UE and the gNB can exchange *RRCReconfiguration* message(s) to update the SDAP configuration. The TX UE can exchange *RRCReconfigurationSidelink* message(s) with RX UE to update the SDAP configuration.

In some implementations, the TX UE can start with link-level frequency mapping (FIG. 8), but if the allowed carriers are non-existent or very few and the TX UE is unable to meet overall throughput demands for the QoS flows, the TX UE can switch to logical channel-level frequency mapping, as shown and described with reference to FIG. 12.

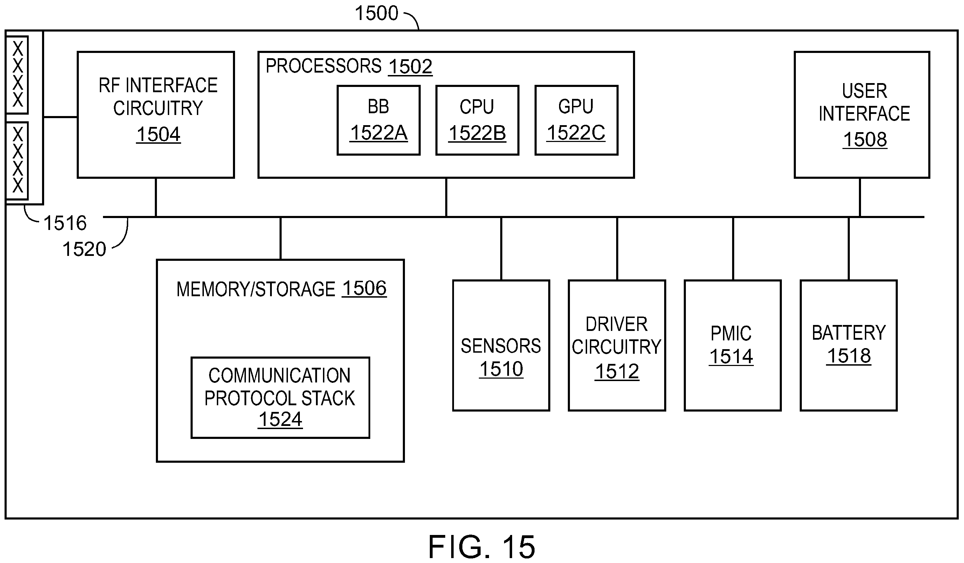

FIG. 15 illustrates an example UE 1500, according to some implementations. The UE 1500 may be similar to and substantially interchangeable with UEs 105 of FIG. 1. The UE 1500 may be any mobile or non-mobile computing device, such as, for example, mobile phones, computers, tablets, industrial wireless sensors (for example, microphones, pressure sensors, thermometers, motion sensors, accelerometers, inventory sensors, electric voltage/current meters, etc.), video devices (for example, cameras, video cameras, etc.), wearable devices (for example, a smart watch), relaxed-IoT devices.

The UE 1500 may include processors 1502, RF interface circuitry 1504, memory/storage 1506, user interface 1508, sensors 1510, driver circuitry 1512, power management integrated circuit (PMIC) 1514, one or more antenna(s) 1516, and battery 1518. The components of the UE 1500 may be implemented as integrated circuits (ICs), portions thereof, discrete electronic devices, or other modules, logic, hardware, software, firmware, or a combination thereof. The block diagram of FIG. 15 is intended to show a high-level view of some of the components of the UE 1500. However, some of the components shown may be omitted, additional components may be present, and different arrangement of the components shown may occur in other implementations.

The components of the UE 1500 may be coupled with various other components over one or more interconnects 1520, which may represent any type of interface, input/output, bus (local, system, or expansion), transmission line, trace, optical connection, etc. that allows various circuit components (on common or different chips or chipsets) to interact with one another.

The processors 1502 may include processor circuitry such as, for example, baseband processor circuitry (BB) 1522A, central processor unit circuitry (CPU) 1522B, and graphics processor unit circuitry (GPU) 1522C. The processors 1502 may include any type of circuitry or processor circuitry that executes or otherwise operates computer-executable instructions, such as program code, software modules, or functional processes from memory/storage 1506 to cause the UE 1500 to perform operations as described herein.

In some implementations, the baseband processor circuitry 1522A may access a communication protocol stack 1524 in the memory/storage 1506 to communicate over a 3GPP compatible network. In general, the baseband processor circuitry 1522A may access the communication protocol stack to: perform user plane functions at a PHY layer, MAC layer, RLC layer, PDCP layer, SDAP layer, and PDU layer; and perform control plane functions at a PHY layer, MAC layer, RLC layer, PDCP layer, RRC layer, and a non-access stratum layer. In some implementations, the PHY layer operations may additionally/alternatively be performed by the components of the RF interface circuitry 1504. The baseband processor circuitry 1522A may generate or process baseband signals or waveforms that carry information in 3GPP-compatible networks. In some implementations, the waveforms for NR may be based cyclic prefix orthogonal frequency division multiplexing (OFDM) "CP-OFDM" in the uplink or downlink, and discrete Fourier transform spread OFDM "DFT-S-OFDM" in the uplink.

The memory/storage 1506 may include one or more non-transitory, computer-readable media that includes instructions (for example, communication protocol stack 1524) that may be executed by one or more of the processors 1502 to cause the UE 1500 to perform various operations described herein. The memory/storage 1506 include any type of volatile or non-volatile memory that may be distributed throughout the UE 1500. In some implementations, some of the memory/storage 1506 may be located on the processors 1502 themselves (for example, L1 and L2 cache), while other memory/storage 1506 is external to the processors 1502 but accessible thereto via a memory interface. The memory/storage 1506 may include any suitable volatile or non-volatile memory such as, but not limited to, dynamic random access memory (DRAM), static random access memory (SRAM), erasable programmable read only memory (EPROM), electrically erasable programmable read only memory (EEPROM), Flash memory, solid-state memory, or any other type of memory device technology.

The RF interface circuitry 1504 may include transceiver circuitry and radio frequency front module (RFEM) that allows the UE 1500 to communicate with other devices over a radio access network. The RF interface circuitry 1504 may include various elements arranged in transmit or receive paths. These elements may include, for example, switches, mixers, amplifiers, filters, synthesizer circuitry, control circuitry, etc.

In the receive path, the RFEM may receive a radiated signal from an air interface via antenna(s) 1516 and proceed to filter and amplify (with a low-noise amplifier) the signal. The signal may be provided to a receiver of the transceiver that downconverts the RF signal into a baseband signal that is provided to the baseband processor of the processors 1502.

In the transmit path, the transmitter of the transceiver up-converts the baseband signal received from the baseband processor and provides the RF signal to the RFEM. The RFEM may amplify the RF signal through a power amplifier prior to the signal being radiated across the air interface via the antenna(s) 1516. In various implementations, the RF interface circuitry 1504 may be configured to transmit/receive signals in a manner compatible with NR access technologies.

The antenna(s) 1516 may include one or more antenna elements to convert electrical signals into radio waves to travel through the air and to convert received radio waves into electrical signals. The antenna elements may be arranged into one or more antenna panels. The antenna(s) 1516 may have antenna panels that are omnidirectional, directional, or a combination thereof to enable beamforming and multiple input, multiple output communications. The antenna(s) 1516 may include microstrip antennas, printed antennas fabricated on the surface of one or more printed circuit boards, patch antennas, phased array antennas, etc. The antenna(s) 1516 may have one or more panels designed for specific frequency bands including bands in FR1 or FR2.

The user interface 1508 includes various input/output (I/O) devices designed to enable user interaction with the UE 1500. The user interface 1508 includes input device circuitry and output device circuitry. Input device circuitry includes any physical or virtual means for accepting an input including, inter alia, one or more physical or virtual buttons (for example, a reset button), a physical keyboard, keypad, mouse, touchpad, touchscreen, microphones, scanner, headset, or the like. The output device circuitry includes any physical or virtual means for showing information or otherwise conveying information, such as sensor readings, actuator position(s), or other like information. Output device circuitry may include any number or combinations of audio or visual display, including, inter alia, one or more simple visual outputs/indicators (for example, binary status indicators such as light emitting diodes "LEDs" and multi-character visual outputs), or more complex outputs such as display devices or touchscreens (for example, liquid crystal displays "LCDs," LED displays, quantum dot displays, projectors, etc.), with the output of characters, graphics, multimedia objects, and the like being generated or produced from the operation of the UE 1500.

The sensors 1510 may include devices, modules, or subsystems whose purpose is to detect events or changes in its environment and send the information (sensor data) about the detected events to some other device, module, subsystem, etc. Examples of such sensors include, inter alia, inertia measurement units including accelerometers, gyroscopes, or magnetometers; microelectromechanical systems or nanoelectromechanical systems including 3-axis accelerometers, 3-axis gyroscopes, or magnetometers; level sensors; temperature sensors (for example, thermistors); pressure sensors; image capture devices (for example, cameras or lensless apertures); light detection and ranging sensors; proximity sensors (for example, infrared radiation detector and the like); depth sensors; ambient light sensors; ultrasonic transceivers; microphones or other like audio capture devices; etc.

The driver circuitry 1512 may include software and hardware elements that operate to control particular devices that are embedded in the UE 1500, attached to the UE 1500, or otherwise communicatively coupled with the UE 1500. The driver circuitry 1512 may include individual drivers allowing other components to interact with or control various input/output (I/O) devices that may be present within, or connected to, the UE 1500. For example, driver circuitry 1512 may include a display driver to control and allow access to a display device, a touchscreen driver to control and allow access to a touchscreen interface, sensor drivers to obtain sensor readings of sensors 1510 and control and allow access to sensors 1510, drivers to obtain actuator positions of electro-mechanic components or control and allow access to the electro-mechanic components, a camera driver to control and allow access to an embedded image capture device, audio drivers to control and allow access to one or more audio devices.

The PMIC 1514 may manage power provided to various components of the UE 1500. In particular, with respect to the processors 1502, the PMIC 1514 may control power-source selection, voltage scaling, battery charging, or DC-to-DC conversion.

In some implementations, the PMIC 1514 may control, or otherwise be part of, various power saving mechanisms of the UE 1500. A battery 1518 may power the UE 1500, although in some examples the UE 1500 may be mounted deployed in a fixed location, and may have a power supply coupled to an electrical grid. The battery 1518 may be a lithium ion battery, a metal-air battery, such as a zinc-air battery, an aluminum-air battery, a lithium-air battery, and the like. In some implementations, such as in vehicle-based applications, the battery 1518 may be a typical lead-acid automotive battery.

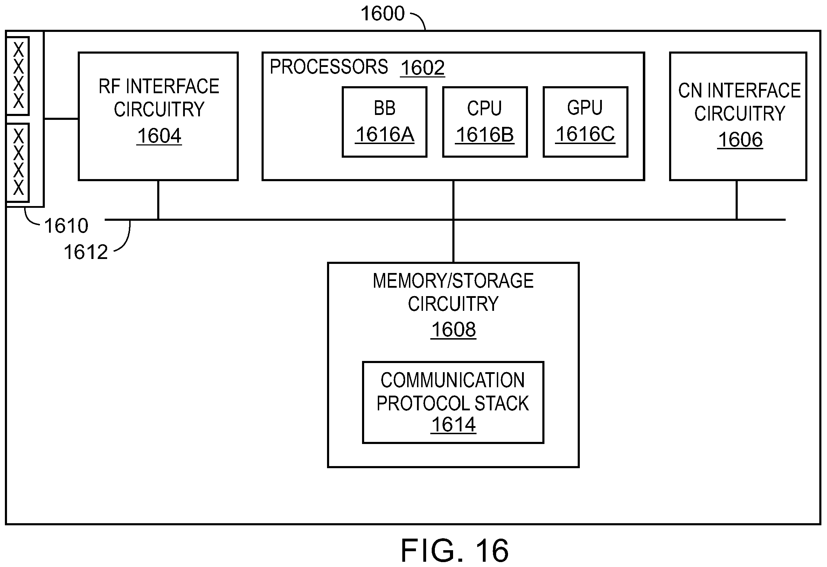

FIG. 16 illustrates an example access node 1600 (e.g., a base station or gNB), according to some implementations. The access node 1600 may be similar to and substantially interchangeable with base stations 110. The access node 1600 may include processors 1602, RF interface circuitry 1604, core network (CN) interface circuitry 1606, memory/storage circuitry 1608, and one or more antenna(s) 1610.

The components of the access node 1600 may be coupled with various other components over one or more interconnects 1612. The processors 1602, RF interface circuitry 1604, memory/storage circuitry 1608 (including communication protocol stack 1614), antenna(s) 1610, and interconnects 1612 may be similar to like-named elements shown and described with respect to FIG. 15. For example, the processors 1602 may include processor circuitry such as, for example, baseband processor circuitry (BB) 1616A, central processor unit circuitry (CPU) 1616B, and graphics processor unit circuitry (GPU) 1616C.

The CN interface circuitry 1606 may provide connectivity to a core network, for example, a 5th Generation Core network (5GC) using a 5GC-compatible network interface protocol such as carrier Ethernet protocols, or some other suitable protocol. Network connectivity may be provided to/from the access node 1600 via a fiber optic or wireless backhaul. The CN interface circuitry 1606 may include one or more dedicated processors or FPGAs to communicate using one or more of the aforementioned protocols. In some implementations, the CN interface circuitry 1606 may include multiple controllers to provide connectivity to other networks using the same or different protocols.

As used herein, the terms "access node," "access point," or the like may describe equipment that provides the radio baseband functions for data and/or voice connectivity between a network and one or more users. These access nodes can be referred to as BS, gNBs, RAN nodes, eNBs, NodeBs, RSUs, TRxPs or TRPs, and so forth, and can include ground stations (e.g., terrestrial access points) or satellite stations providing coverage within a geographic area (e.g., a cell). As used herein, the term "NG RAN node" or the like may refer to an access node 1600 that operates in an NR or 5G system (for example, a gNB), and the term "E-UTRAN node" or the like may refer to an access node 1600 that operates in an LTE or 4G system (e.g., an eNB). According to various implementations, the access node 1600 may be implemented as one or more of a dedicated physical device such as a macrocell base station, and/or a low power (LP) base station for providing femtocells, picocells or other like cells having smaller coverage areas, smaller user capacity, or higher bandwidth compared to macrocells.

In some implementations, all or parts of the access node 1600 may be implemented as one or more software entities running on server computers as part of a virtual network, which may be referred to as a CRAN and/or a virtual baseband unit pool (vBBUP). In V2X scenarios, the access node 1600 may be or act as a "Road Side Unit." The term "Road Side Unit" or "RSU" may refer to any transportation infrastructure entity used for V2X communications. An RSU may be implemented in or by a suitable RAN node or a stationary (or relatively stationary) UE, where an RSU implemented in or by a UE may be referred to as a "UE-type RSU," an RSU implemented in or by an eNB may be referred to as an "eNB-type RSU," an RSU implemented in or by a gNB may be referred to as a "gNB-type RSU," and the like.

Various components may be described as performing a task or tasks, for convenience in the description. Such descriptions should be interpreted as including the phrase "configured to." Reciting a component that is configured to perform one or more tasks is expressly intended not to invoke 35 U.S.C. § 112(f) interpretation for that component.

For one or more embodiments, at least one of the components set forth in one or more of the preceding figures may be configured to perform one or more operations, techniques, processes, or methods as set forth in the example section below. For example, the baseband circuitry as described above in connection with one or more of the preceding figures may be configured to operate in accordance with one or more of the examples set forth below. For another example, circuitry associated with a UE, base station, network element, etc. as described above in connection with one or more of the preceding figures may be configured to operate in accordance with one or more of the examples set forth below in the example section.

Example 1 is an apparatus including: one or more processors; and memory storing instructions that, when executed by the one or more processors, cause the apparatus to perform operations including: receiving, from RF circuitry, a configuration for mapping PC5 QoS flows to frequencies; receiving, from the RF circuitry, a sidelink logical channel configuration message indicating that sidelink data associated with a logical channel can be mapped to one or more sidelink carriers on a list of allowed sidelink carriers; and instructing the RF circuitry to transmit the sidelink data associated with the logical channel via at least one sidelink carrier on the list of allowed sidelink carriers based at least in part on mapping the logical channel to the at least one sidelink carrier in accordance with the configuration for mapping and the sidelink logical channel configuration message.

Example 2 is the apparatus of example 1, the operations further including: instructing the RF circuitry to transmit, in accordance with the sidelink logical channel configuration message, an RRC sidelink reconfiguration message indicating a sidelink carrier on the list of allowed sidelink carriers to be added or modified for unicast sidelink communications, where the sidelink data is transmitted via the sidelink carrier indicated by the RRC sidelink reconfiguration message.

Example 3 is the apparatus of any of examples 1 to 2, the operations further including: instructing the RF circuitry to transmit, in accordance with the sidelink logical channel configuration message, an RRC sidelink reconfiguration message indicating a sidelink carrier to be released from unicast sidelink communications, where transmitting the sidelink data via the at least one sidelink carrier on the list of allowed sidelink carriers is based at least in part on the RRC sidelink reconfiguration message.

Example 4 is the apparatus of any of examples 1 to 3, the operations further including: instructing the RF circuitry to transmit, in accordance with the sidelink logical channel configuration message, an RRC sidelink reconfiguration message indicating one or more PC5 QoS flows to be mapped to a DRB configured for unicast sidelink communications, where the sidelink data is transmitted using the DRB mapped to the one or more QoS flows indicated by the RRC sidelink reconfiguration message.

Example 5 is the apparatus of any of examples 1 to 4, the operations further including: instructing the RF circuitry to transmit, in accordance with the sidelink logical channel configuration message, an RRC sidelink reconfiguration message indicating one or more PC5 QoS flows to be released from a DRB configured for unicast sidelink communications, where instructing the RF circuitry to transmit the sidelink data via the at least one sidelink carrier on the list of allowed sidelink carriers is based at least in part on the RRC sidelink reconfiguration message.

Example 6 is the apparatus of any of examples 1 to 5, the operations further including: instructing the RF circuitry to transmit, in accordance with the sidelink logical channel configuration message, an RRC sidelink reconfiguration message including an identifier of the logical channel to which the at least one sidelink carrier is mapped, where instructing the RF circuitry to transmit the sidelink data via the at least one sidelink carrier mapped to the logical channel is based at least in part on the RRC sidelink reconfiguration message.

Example 7 is the apparatus of any of examples 1 to 6, where a field of the sidelink logical channel configuration message indicates the list of allowed sidelink carriers for the logical channel.

Example 8 is the apparatus of any of examples 1 to 7, further including determining, based at least in part on the sidelink logical channel configuration message, that the at least one sidelink carrier is within a subset of frequencies associated with all PC5 QoS flows allowed to be mapped to the logical channel.

Example 9 is the apparatus of any of examples 1 to 8, where the sidelink logical channel configuration message indicates that the sidelink data from the logical channel can be mapped to any configured sidelink carriers.

Example 10 is the apparatus of any of examples 1 to 9, further including instructing the RF circuitry to transmit a SUI message to a network entity while the apparatus is in a connected state, the SUI message indicating the mapping between PC5 QoS flows and frequencies.

Example 11 is the apparatus of any of examples 1 to 10, where the sidelink logical channel configuration message reconfigures a PC5 QoS flow to SLRB mapping of the apparatus.

Example 12 is the apparatus of any of examples 1 to 11, further including instructing the RF circuitry to transmit an indication that the apparatus is unable to change a carrier set of a mapped SLRB via an LCP restriction of the logical channel in a SUI message.

Example 13 is the apparatus of any of examples 1 to 12, where the configuration for mapping PC5 QoS flows to frequencies is provided by a V2X layer of the apparatus.

Example 14 is an apparatus including: one or more processors; and memory storing instructions that, when executed by the one or more processors, cause the apparatus to perform operations including: receiving, from RF circuitry, a configuration for mapping PC5 QoS flows to frequencies; instructing the RF circuitry to transmit a sidelink logical channel configuration message indicating that sidelink data associated with a logical channel can be mapped to one or more sidelink carriers on a list of allowed sidelink carriers; and receiving, from the RF circuitry, the sidelink data associated with the logical channel via at least one sidelink carrier on the list of allowed sidelink carriers based at least in part on mapping the logical channel to the at least one sidelink carrier in accordance with the configuration for mapping and the sidelink logical channel configuration message.

Example 15 is the apparatus of example 14, the operations further including: receiving, from the RF circuitry, an RRC sidelink reconfiguration message indicating a sidelink carrier on the list of allowed sidelink carriers to be added or modified for unicast sidelink communications, where the sidelink data is received via the sidelink carrier indicated by the RRC sidelink reconfiguration message.

Example 16 is the apparatus of any of examples 14 to 15, the operations further including: receiving, from the RF circuitry, an RRC sidelink reconfiguration message indicating a sidelink carrier to be released from unicast sidelink communications, where receiving the sidelink data via the at least one sidelink carrier on the list of allowed sidelink carriers is based at least in part on the RRC sidelink reconfiguration message.

Example 17 is the apparatus of any of examples 14 to 16, the operations further including: receiving, from the RF circuitry, an RRC sidelink reconfiguration message indicating one or more PC5 QoS flows to be mapped to a DRB configured for unicast sidelink communications, where the sidelink data is received using the DRB mapped to the one or more PC5 QoS flows indicated by the RRC sidelink reconfiguration message.

Example 18 is the apparatus of any of examples 14 to 17, the operations further including: receiving, from the RF circuitry, an RRC sidelink reconfiguration message indicating one or more PC5 QoS flows to be released from a DRB configured for unicast sidelink communications, where receiving the sidelink data via the at least one sidelink carrier on the list of allowed sidelink carriers is based at least in part on the RRC sidelink reconfiguration message.

Example 19 is the apparatus of any of examples 14 to 18, the operations further including: receiving, from the RF circuitry, an RRC sidelink reconfiguration message including an identifier of the logical channel to which the at least one sidelink carrier is mapped, where receiving the sidelink data via the at least one sidelink carrier mapped to the logical channel is based at least in part on the RRC sidelink reconfiguration message.

Example 20 is a method including: receiving a configuration for mapping PC5 QoS flows to frequencies; receiving a sidelink logical channel configuration message indicating that sidelink data associated with a logical channel can be mapped to one or more sidelink carriers on a list of allowed sidelink carriers; and transmitting the sidelink data associated with the logical channel via at least one sidelink carrier on the list of allowed sidelink carriers based at least in part on mapping the logical channel to the at least one sidelink carrier in accordance with the configuration for mapping and the sidelink logical channel configuration message.

Example 21 includes a non-transitory computer storage medium encoded with instructions that, when executed by one or more processors, cause the one or more processors to perform one or more operations described in any of examples 1-20, or any other method or process described herein.

Example 22 includes an apparatus including logic, modules, and/or circuitry (e.g., processing circuitry and/or RF circuitry) configured to perform one or more operations described in any of examples 1-20, or any other method or process described herein.

Example 23 includes an apparatus including one or more processors (e.g., one or more baseband processors) configured to perform one or more operations described in any of examples 1-20, or any other method or process described herein.

Example 24 includes a system configured to perform one or more operations described in any of examples 1-20, or any other method or process described herein.

Example 25 includes a device configured to perform one or more operations described in any of examples 1-20, or any other method or process described herein.

Example 26 includes a UE configured to perform one or more operations described in any of examples 1-20, or any other method or process described herein.

As described above, one aspect of the present technology may relate to the gathering and use of data available from specific and legitimate sources to allow for interaction with a second device for a data transfer. The present disclosure contemplates that in some instances, this gathered data may include personal information data that uniquely identifies or can be used to identify a specific person. Such personal information data can include demographic data, location-based data, online identifiers, telephone numbers, email addresses, home addresses, data or records relating to a user's health or level of fitness (e.g., vital signs measurements, medication information, exercise information), date of birth, or any other personal information.

The present disclosure recognizes that the use of such personal information data, in the present technology, can be used to the benefit of users. For example, the personal information data can be used to provide for secure data transfers occurring between a first device and a second device. The personal information data may further be utilized for identifying an account associated with the user from a service provider for completing a data transfer.

The present disclosure contemplates that those entities responsible for the collection, analysis, disclosure, transfer, storage, or other use of such personal information data will comply with well-established privacy policies and/or privacy practices. In particular, such entities would be expected to implement and consistently apply privacy practices that are generally recognized as meeting or exceeding industry or governmental requirements for maintaining the privacy of users. Such information regarding the use of personal data should be prominent and easily accessible by users, and should be updated as the collection and/or use of data changes. Personal information from users should be collected for legitimate uses only. Further, such collection/sharing should occur only after receiving the consent of the users or other legitimate basis specified in applicable law. Additionally, such entities should consider taking any needed steps for safeguarding and securing access to such personal information data and ensuring that others with access to the personal information data adhere to their privacy policies and procedures. Further, such entities can subject themselves to evaluation by third parties to certify their adherence to widely accepted privacy policies and practices. In addition, policies and practices should be adapted for the particular types of personal information data being collected and/or accessed and adapted to applicable laws and standards, including jurisdiction-specific considerations that may serve to impose a higher standard. For instance, in the US, collection of or access to certain health data may be governed by federal and/or state laws, such as the Health Insurance Portability and Accountability Act (HIPAA), whereas health data in other countries may be subject to other regulations and policies and should be handled accordingly.

Despite the foregoing, the present disclosure also contemplates embodiments in which users selectively block the use of, or access to, personal information data. That is, the present disclosure contemplates that hardware and/or software elements can be provided to prevent or block access to such personal information data. For example, the present technology can be configured to allow users to select to "opt in" or "opt out" of participation in the collection of personal information data during registration for services or anytime thereafter. For example, a user may "opt in" or "opt out" of having information associated with an account of the user stored on a user device and/or shared by the user device. In addition to providing "opt in" and "opt out" options, the present disclosure contemplates providing notifications relating to the access or use of personal information. For instance, a user may be notified upon downloading an application that their personal information data will be accessed and then reminded again just before personal information data is accessed by the application. In some instances, the user may be notified upon initiation of a data transfer of the device accessing information associated with the account of the user and/or the sharing of information associated with the account of the user with another device.

Moreover, it is the intent of the present disclosure that personal information data should be managed and handled in a way to minimize risks of unintentional or unauthorized access or use. Risk can be minimized by limiting the collection of data and deleting data once it is no longer needed. In addition, and when applicable, including in certain health related applications, data de-identification can be used to protect a user's privacy. De-identification may be facilitated, when appropriate, by removing identifiers, controlling the amount or specificity of data stored (e.g., collecting location data at city level rather than at an address level), controlling how data is stored (e.g., aggregating data across users), and/or other methods such as differential privacy.

Therefore, although the present disclosure broadly covers use of personal information data to implement one or more various disclosed embodiments, the present disclosure also contemplates that the various embodiments can also be implemented without the need for accessing such personal information data. That is, the various embodiments of the present technology are not rendered inoperable due to the lack of all or a portion of such personal information data. For example, content can be selected and delivered to users based on aggregated non-personal information data or a bare minimum amount of personal information, such as the content being handled only on the user's device or other non-personal information available to the content delivery services.

Exemplary embodiments of the present disclosure are set out in the following items and articles:

### Items

1. An apparatus comprising:
   one or more processors; and
   memory storing instructions that, when executed by the one or more processors, cause the apparatus to perform operations comprising:
      receiving, from radio frequency (RF) circuitry, a configuration for mapping PC5 quality of service (QoS) flows to frequencies;
      receiving, from the RF circuitry, a sidelink logical channel configuration message indicating that sidelink data associated with a logical channel can be mapped to one or more sidelink carriers on a list of allowed sidelink carriers; and
      instructing the RF circuitry to transmit the sidelink data associated with the logical channel via at least one sidelink carrier on the list of allowed sidelink carriers based at least in part on mapping the logical channel to the at least one sidelink carrier in accordance with the configuration for mapping and the sidelink logical channel configuration message.
2. The apparatus of item 1, the operations further comprising:
   instructing the RF circuitry to transmit, in accordance with the sidelink logical channel configuration message, a radio resource control (RRC) sidelink reconfiguration message indicating a sidelink carrier on the list of allowed sidelink carriers to be added or modified for unicast sidelink communications, wherein the sidelink data is transmitted via the sidelink carrier indicated by the RRC sidelink reconfiguration message.
3. The apparatus of any of items 1-2, the operations further comprising:
   instructing the RF circuitry to transmit, in accordance with the sidelink logical channel configuration message, a radio resource control (RRC) sidelink reconfiguration message indicating a sidelink carrier to be released from unicast sidelink communications, wherein instructing the RF circuitry to transmit the sidelink data via the at least one sidelink carrier on the list of allowed sidelink carriers is based at least in part on the RRC sidelink reconfiguration message.
4. The apparatus of any of items 1-3, the operations further comprising:
   instructing the RF circuitry to transmit, in accordance with the sidelink logical channel configuration message, a radio resource control (RRC) sidelink reconfiguration message indicating one or more PC5 QoS flows to be mapped to a data radio bearer (DRB) configured for unicast sidelink communications, wherein the sidelink data is transmitted using the DRB mapped to the one or more PC5 QoS flows indicated by the RRC sidelink reconfiguration message.
5. The apparatus of any of items 1-4, the operations further comprising:
   instructing the RF circuitry to transmit, in accordance with the sidelink logical channel configuration message, a radio resource control (RRC) sidelink reconfiguration message indicating one or more PC5 QoS flows to be released from a data radio bearer (DRB) configured for unicast sidelink communications, wherein instructing the RF circuitry to transmit the sidelink data via the at least one sidelink carrier on the list of allowed sidelink carriers is based at least in part on the RRC sidelink reconfiguration message.
6. The apparatus of any of items 1-5, the operations further comprising:
   instructing the RF circuitry to transmit, in accordance with the sidelink logical channel configuration message, a radio resource control (RRC) sidelink reconfiguration message comprising an identifier of the logical channel to which the at least one sidelink carrier is mapped, wherein instructing the RF circuitry to transmit the sidelink data via the at least one sidelink carrier mapped to the logical channel is based at least in part on the RRC sidelink reconfiguration message.
7. The apparatus of any of items 1-6, wherein a field of the sidelink logical channel configuration message indicates the list of allowed sidelink carriers for the logical channel.
8. The apparatus of any of items 1-7, further comprising determining, based at least in part on the sidelink logical channel configuration message, that the at least one sidelink carrier is within a subset of frequencies associated with all PC5 QoS flows allowed to be mapped to the logical channel.
9. The apparatus of any of items 1-8, wherein the sidelink logical channel configuration message indicates that the sidelink data from the logical channel can be mapped to any configured sidelink carriers.
10. The apparatus of any of items 1-9, the operations further comprising instructing the RF circuitry to transmit a sidelink user information (SUI) message to a network entity while the apparatus is in a connected state, the SUI message indicating the mapping between PC5 QoS flows and frequencies.
11. The apparatus of any of items 1-10, wherein the sidelink logical channel configuration message reconfigures a PC5 QoS flow to sidelink radio bearer (SLRB) mapping of the apparatus.
12. The apparatus of any of items 1-11, the operations further comprising instructing the RF circuitry to transmit an indication that the apparatus is unable to change a carrier set of a mapped sidelink radio bearer (SLRB) via a logical channel prioritization (LCP) restriction of the logical channel in a sidelink user information (SUI) message.
13. The apparatus of any of items 1-12, wherein the configuration for mapping PC5 QoS flows to frequencies is provided by a vehicle to everything (V2X) layer of the apparatus.
14. An apparatus comprising:
   one or more processors; and
   memory storing instructions that, when executed by the one or more processors, cause the apparatus to perform operations comprising:
      receiving, from radio frequency (RF) circuitry, a configuration for mapping PC5 quality of service (QoS) flows to frequencies;
      instructing the RF circuitry to transmit a sidelink logical channel configuration message indicating that sidelink data associated with a logical channel can be mapped to one or more sidelink carriers on a list of allowed sidelink carriers; and
      receiving, from the RF circuitry, the sidelink data associated with the logical channel via at least one sidelink carrier on the list of allowed sidelink carriers based at least in part on mapping the logical channel to the at least one sidelink carrier in accordance with the configuration for mapping and the sidelink logical channel configuration message.
15. The apparatus of item 14, the operations further comprising:
   receiving, from the RF circuitry, a radio resource control (RRC) sidelink reconfiguration message indicating a sidelink carrier on the list of allowed sidelink carriers to be added or modified for unicast sidelink communications, wherein the sidelink data is received via the sidelink carrier indicated by the RRC sidelink reconfiguration message.
16. The apparatus of any of items 14-15, the operations further comprising:
   receiving, from the RF circuitry, a radio resource control (RRC) sidelink reconfiguration message indicating a sidelink carrier to be released from unicast sidelink communications, wherein receiving the sidelink data via the at least one sidelink carrier on the list of allowed sidelink carriers is based at least in part on the RRC sidelink reconfiguration message.
17. The apparatus of any of items 14-16, the operations further comprising:
   receiving, from the RF circuitry, a radio resource control (RRC) sidelink reconfiguration message indicating one or more PC5 QoS flows to be mapped to a data radio bearer (DRB) configured for unicast sidelink communications, wherein the sidelink data is received using the DRB mapped to the one or more PC5 QoS flows indicated by the RRC sidelink reconfiguration message.
18. The apparatus of any of items 14-17, the operations further comprising:
   receiving, from the RF circuitry, a radio resource control (RRC) sidelink reconfiguration message indicating one or more PC5 QoS flows to be released from a data radio bearer (DRB) configured for unicast sidelink communications, wherein receiving the sidelink data via the at least one sidelink carrier on the list of allowed sidelink carriers is based at least in part on the RRC sidelink reconfiguration message.
19. The apparatus of any of items 14-18, the operations further comprising:
   receiving, from the RF circuitry, a radio resource control (RRC) sidelink reconfiguration message comprising an identifier of the logical channel to which the at least one sidelink carrier is mapped, wherein receiving the sidelink data via the at least one sidelink carrier mapped to the logical channel is based at least in part on the RRC sidelink reconfiguration message.
20. A method comprising:
   receiving a configuration for mapping PC5 quality of service (QoS) flows to frequencies;
   receiving a sidelink logical channel configuration message indicating that sidelink data associated with a logical channel can be mapped to one or more sidelink carriers on a list of allowed sidelink carriers; and
   transmitting the sidelink data associated with the logical channel via at least one sidelink carrier on the list of allowed sidelink carriers based at least in part on mapping the logical channel to the at least one sidelink carrier in accordance with the configuration for mapping and the sidelink logical channel configuration message.

### Articles

1. A method performed by a user equipment (UE) comprising:
   determining that a PC5 QoS Flow is added or modified;
   providing, from a V2X layer, a new or updated set of QoS Flow-to-frequency mapping to an access stratum layer; and
   in the access stratum layer, deriving a mapping from target layer-2 identifier (L2 ID)-to-frequency mapping based on the received QoS Flow-to-frequency mapping.
2. The method of article 1, wherein the QoS Flow-to-frequency mapping comprises a new service to frequency mapping.
3. The method of any of articles 1 or 2, wherein the QoS Flow-to-frequency mapping comprises a new service to L2 ID mapping.
4. The method of article 3, wherein the V2X layer provides a full set of all services to frequencies mapping.
5. The method of any of articles 3-4, wherein the V2X layer provides a full set of services to frequencies mapping in initial link, and provides a change to the set of services to frequencies mapping upon determination that a PC5 QoS Flow is added or modified.
6. The method of any of articles 1-5, wherein the AS layer synthesizes a QoS Flow to carrier mapping.
7. The method of article 6, wherein the AS layer generates a subset of carriers among all QoS Flows, designated as allowed SL carriers, based on an intersection between the carriers mapped to all of the QoS Flows received from the V2X layer.
8. The method of any of the preceding articles, further comprising:
   notifying another UE of a set of allowed SL carriers via PC5 RRC messaging.
9. The method of article 8, wherein the UE is in CONNECTED state, and notifies a connected gNB of the allowed SL carriers via an RRC message (e.g., a SUI).
10. The method of any of articles 8-9, wherein the allowed SL carriers is an empty set and the UE is in IDLE/INACTIVE state, and the UE requests to enter the CONNECTED state to notify a gNB of the empty set via SUI.
11. An apparatus comprising one or more baseband processors configured to perform the method of any of articles 1 to 10.
12. A method performed by a UE, the method comprising:
   receiving a list of allowed frequencies in a sidelink logical channel configuration message, or other RRC configuration message, for a logical channel;
   receiving a list of frequencies associated with the sidelink radio bearer (SLRB) index in an RRC sidelink reconfiguration message;
   in the MAC layer, mapping a logical channel to an allowed frequency from the list of allowed frequencies that is associated with the SLRB index; and
   transmitting data to a UE using sidelink resources including at least one frequency mapped to the logical channel.
13. The method of article 12, further comprising identifying overlapping frequencies between the list of allowed frequencies and the frequencies in the list of frequencies associated with the SLRB.
14. The method of any of articles 12 or 13, further comprising:
   identifying an available set of SLRBs from a higher layer mapping for QoS Flow to frequencies;
   determining a different list of allowed frequencies based on the available set of SLRBs; and
   mapping the logical channel to an allowed frequency from the different list of allowed frequencies.
15. The method of article 14, wherein the UE is in IDLE/INACTIVE/OOC mode.
16. The method of any of articles 12-15, wherein the UE is in CONNECTED mode, and the method comprises:
   identifying an available set of SLRBs from a higher layer mapping for QoS Flow to frequencies;
   notifying a network entity that the UE is connected to of the received QoS Flow-to-frequencies mapping; and
   receiving from the network entity to a logical channel prioritization (LCP) restriction in a RRC message including a second sidelink logical channel configuration message.
17. The method of article 16, wherein the second sidelink logical channel configuration message comprises a new list of allowed frequencies for the logical channel.
18. The method of any of articles 12-17 (or any preceding article), further comprising:
   mapping an unknown QoS Flow to an SLRB index that is associated with a logical channel with a frequency list aligned with the UE's mapped frequencies.
19. The method of article 18, wherein the UE is in CONNECTED state, and the method comprises notifying a connected network entity of the mapping of the unknown QoS Flow to the selected SLRB index.
20. The method of any of articles 12-19 (or any of articles 12-17), wherein no existing SLRB has an associated logical channel with a frequency list aligned to the UEs mapped frequencies, the method comprising:
   adding mapped frequencies to a logical channel prioritization restriction of a default SLRB; and
   mapping an unknown QoS Flow to the default SLRB.
21. The method of any of articles 12-20, wherein no existing SLRB has an associated logical channel with a frequency list aligned to the UEs mapped frequencies, the method comprising:
   if the UE is in a CONNECTED state, notifying a network entity connected to the UE of a failure to map the unknown QoS Flow to a default SLRB.
22. The method of any of the preceding articles, wherein the UE is in the CONNECTED state, the method further comprising notifying a connected network entity, using a sidelink user information (SUI), of the received QoS Flow to frequency mapping received from the V2X layer.
23. A method performed by a UE, the method comprising:
   receiving a new QoS Flow to frequency mapping from a V2X layer;
   determining an existing sidelink radio bearer (SLRB) to frequency mapping;
   remapping the new QoS Flow to the existing SLRB; and
   transmitting data to another UE using the new QoS Flow to SLRB mapping.
24. The method of article 23, wherein the UE cannot change one or more frequencies mapped to the existing SLRB based on a logical channel prioritization restriction of an associated logical channel.
25. The method of articles 23 or 24, wherein the UE overwrites the Service Data Adaptation Protocol (SDAP) configuration in the Uu link using RRC or SIB or other reconfiguration messaging.
26. The method of any of articles 23-25, further comprising:
   reporting the new QoS Flow to frequency mapping to a connected network entity via a sidelink user information (SUI) message; and
   receiving, from the connected network entity, a reconfiguration of the QoS Flow to SLRB mapping.
27. The method of article 26, further comprising informing the connected network entity, by a SUI message, that the UE cannot change the frequency set of the mapped SLRB because of a logical channel prioritization restriction associated with a logical channel.
28. The method of any of articles 26-27, wherein the UE is in a CONNECTED state, the method further comprising notifying a connected network entity of the received QoS Flow to frequency mapping received from the V2X layer using a sidelink user information (SUI) message.
29. A user equipment (LTE) comprising one or more baseband processors and memory encoded with instructions that, when executed by the one or more baseband processors, cause the one or more baseband processors to perform the method of any preceding article.
30. A system comprising one or more processors and one or more storage devices on which are stored instructions that are operable, when executed by the one or more processors, to cause the one or more processors to perform the method of any of articles 1 to 28.
31. An apparatus configured to perform one or more operations described in the specification.

## Claims

1. An apparatus comprising:
one or more processors; and
memory storing instructions that, when executed by the one or more processors, cause the apparatus to perform operations comprising:
receiving, from radio frequency (RF) circuitry, a configuration for mapping PC5 quality of service (QoS) flows to frequencies;
receiving, from the RF circuitry, a sidelink logical channel configuration message indicating that sidelink data associated with a logical channel can be mapped to one or more sidelink carriers on a list of allowed sidelink carriers; and
instructing the RF circuitry to transmit the sidelink data associated with the logical channel via at least one sidelink carrier on the list of allowed sidelink carriers based at least in part on mapping the logical channel to the at least one sidelink carrier in accordance with the configuration for mapping and the sidelink logical channel configuration message.

2. The apparatus of claim 1, the operations further comprising:
instructing the RF circuitry to transmit, in accordance with the sidelink logical channel configuration message, a radio resource control (RRC) sidelink reconfiguration message indicating a sidelink carrier on the list of allowed sidelink carriers to be added or modified for unicast sidelink communications, wherein the sidelink data is transmitted via the sidelink carrier indicated by the RRC sidelink reconfiguration message.

3. The apparatus of any of claims 1-2, the operations further comprising:
instructing the RF circuitry to transmit, in accordance with the sidelink logical channel configuration message, a radio resource control (RRC) sidelink reconfiguration message indicating a sidelink carrier to be released from unicast sidelink communications, wherein instructing the RF circuitry to transmit the sidelink data via the at least one sidelink carrier on the list of allowed sidelink carriers is based at least in part on the RRC sidelink reconfiguration message.

4. The apparatus of any of claims 1-3, the operations further comprising:
instructing the RF circuitry to transmit, in accordance with the sidelink logical channel configuration message, a radio resource control (RRC) sidelink reconfiguration message indicating one or more PC5 QoS flows to be mapped to a data radio bearer (DRB) configured for unicast sidelink communications, wherein the sidelink data is transmitted using the DRB mapped to the one or more PC5 QoS flows indicated by the RRC sidelink reconfiguration message.

5. The apparatus of any of claims 1-4, the operations further comprising:
instructing the RF circuitry to transmit, in accordance with the sidelink logical channel configuration message, a radio resource control (RRC) sidelink reconfiguration message indicating one or more PC5 QoS flows to be released from a data radio bearer (DRB) configured for unicast sidelink communications, wherein instructing the RF circuitry to transmit the sidelink data via the at least one sidelink carrier on the list of allowed sidelink carriers is based at least in part on the RRC sidelink reconfiguration message.

6. The apparatus of any of claims 1-5, the operations further comprising:
instructing the RF circuitry to transmit, in accordance with the sidelink logical channel configuration message, a radio resource control (RRC) sidelink reconfiguration message comprising an identifier of the logical channel to which the at least one sidelink carrier is mapped, wherein instructing the RF circuitry to transmit the sidelink data via the at least one sidelink carrier mapped to the logical channel is based at least in part on the RRC sidelink reconfiguration message.

7. The apparatus of any of claims 1-6, wherein a field of the sidelink logical channel configuration message indicates the list of allowed sidelink carriers for the logical channel.

8. The apparatus of any of claims 1-7, further comprising determining, based at least in part on the sidelink logical channel configuration message, that the at least one sidelink carrier is within a subset of frequencies associated with all PC5 QoS flows allowed to be mapped to the logical channel.

9. The apparatus of any of claims 1-8, wherein the sidelink logical channel configuration message indicates that the sidelink data from the logical channel can be mapped to any configured sidelink carriers.

10. The apparatus of any of claims 1-9, the operations further comprising instructing the RF circuitry to transmit a sidelink user information (SUI) message to a network entity while the apparatus is in a connected state, the SUI message indicating the mapping between PC5 QoS flows and frequencies.

11. The apparatus of any of claims 1-10, the operations further comprising instructing the RF circuitry to transmit an indication that the apparatus is unable to change a carrier set of a mapped sidelink radio bearer (SLRB) via a logical channel prioritization (LCP) restriction of the logical channel in a sidelink user information (SUI) message.

12. The apparatus of any of claims 1-11,
wherein the configuration for mapping PC5 QoS flows to frequencies is provided by a vehicle to everything (V2X) layer of the apparatus, and/or
wherein the sidelink logical channel configuration message reconfigures a PC5 QoS flow to sidelink radio bearer (SLRB) mapping of the apparatus.

13. An apparatus comprising:
one or more processors; and
memory storing instructions that, when executed by the one or more processors, cause the apparatus to perform operations comprising:
receiving, from radio frequency (RF) circuitry, a configuration for mapping PC5 quality of service (QoS) flows to frequencies;
instructing the RF circuitry to transmit a sidelink logical channel configuration message indicating that sidelink data associated with a logical channel can be mapped to one or more sidelink carriers on a list of allowed sidelink carriers; and
receiving, from the RF circuitry, the sidelink data associated with the logical channel via at least one sidelink carrier on the list of allowed sidelink carriers based at least in part on mapping the logical channel to the at least one sidelink carrier in accordance with the configuration for mapping and the sidelink logical channel configuration message.

14. The apparatus of claim 13, the operations further comprising:
receiving, from the RF circuitry, a radio resource control (RRC) sidelink reconfiguration message indicating a sidelink carrier on the list of allowed sidelink carriers to be added or modified for unicast sidelink communications, wherein the sidelink data is received via the sidelink carrier indicated by the RRC sidelink reconfiguration message, and/or
receiving, from the RF circuitry, a reconfiguration message indicating a sidelink carrier to be released from unicast sidelink communications, wherein receiving the sidelink data via the at least one sidelink carrier on the list of allowed sidelink carriers is based at least in part on the RRC sidelink reconfiguration message, and/or
receiving, from the RF circuitry, a radio resource control (RRC) sidelink reconfiguration message indicating one or more PC5 QoS flows to be mapped to a data radio bearer (DRB) configured for unicast sidelink communications, wherein the sidelink data is received using the DRB mapped to the one or more PC5 QoS flows indicated by the RRC sidelink reconfiguration message, and/or
receiving, from the RF circuitry, a radio resource control (RRC) sidelink reconfiguration message indicating one or more PC5 QoS flows to be released from a data radio bearer (DRB) configured for unicast sidelink communications, wherein receiving the sidelink data via the at least one sidelink carrier on the list of allowed sidelink carriers is based at least in part on the RRC sidelink reconfiguration message, and/or
receiving, from the RF circuitry, a radio resource control (RRC) sidelink reconfiguration message comprising an identifier of the logical channel to which the at least one sidelink carrier is mapped, wherein receiving the sidelink data via the at least one sidelink carrier mapped to the logical channel is based at least in part on the RRC sidelink reconfiguration message.

15. A method comprising:
receiving a configuration for mapping PC5 quality of service (QoS) flows to frequencies;
receiving a sidelink logical channel configuration message indicating that sidelink data associated with a logical channel can be mapped to one or more sidelink carriers on a list of allowed sidelink carriers; and
transmitting the sidelink data associated with the logical channel via at least one sidelink carrier on the list of allowed sidelink carriers based at least in part on mapping the logical channel to the at least one sidelink carrier in accordance with the configuration for mapping and the sidelink logical channel configuration message.
